# EUROPÄISCHE PATENTSCHRIFT

(11) **EP 2 554 572 B1**
(45) Veröffentlichungstag und Bekanntmachung des Hinweises auf die Patenterteilung: **14.01.2015**
(21) Anmeldenummer: 12174701.8
(22) Anmeldetag: 03.07.2012
(51) Int. Cl.: C08G 77/46, C08L 83/12

(54) **Verwendung von Polysiloxanen enthaltend verzweigte Polyetherreste zur Herstellung von Polyurethanschäumen**
Use of polysiloxanes containing branched polyether residues in preparation of polyurethane foams
Utilisation de polysiloxanes contenant des résidus de polyéther ramifiés pour la fabrication de mousses de polyuréthane

(30) Priorität: 03.08.2011 DE 102011109541
(43) Veröffentlichungstag der Anmeldung: 06.02.2013
(73) Patentinhaber: Evonik Degussa GmbH, 45128 Essen (DE)
(72) Erfinder: Lobert, Matthias, 45309 Essen (DE); Schmitz, Sarah, 47198 Duisburg (DE); Hubel, Roland, 45136 Essen (DE); Glos, Martin, 46325 Borken (DE); Schiller, Carsten, 40885 Ratingen (DE)

(56) Entgegenhaltungen:
- EP-A1- 2 261 273

## Beschreibung

Die vorliegende Erfindung betrifft die Verwendung von in einem oder mehreren Polyetherresten verzweigten, vorzugsweise carbonatgruppenhaltigen Polyethersiloxan-Verbindungen als Schaumstabilisatoren bei der Herstellung von Polyurethanschäumen.

Polyurethanschaumstoffe (PUR-Schäume) finden aufgrund ihrer hervorragenden mechanischen und physikalischen Eigenschaften in den verschiedensten Bereichen Verwendung. Einen besonders wichtigen Markt für verschiedenste Typen von PUR-Schäumen, wie konventionelle Weichschäume auf Ether- und Esterpolyolbasis, Kaltschäume (häufig auch als HR-Schäume bezeichnet), Hartschäume, Integralschäume und mikrozellulare Schäume, sowie Schäume deren Eigenschaften zwischen diesen Klassifizierungen liegen, wie z. B. halbharte Systeme, stellt die Automobil- und die Möbelindustrie dar. Es werden z. B. Hartschäume als Dachhimmel, Esterschäume zur Innenverkleidung der Türen sowie für ausgestanzte Sonnenblenden, Kalt- und Weichschäume für Sitzsysteme und Matratzen verwendet.

Die typische Herstellweise für Polyurethanschäume besteht darin, dass während der Reaktion einer flüssigen Reaktionsmischung, die sich typischerweise zusammensetzt aus Polyester- oder Polyetherpolyol, Isocyanat, Stabilisator, Katalysator, evtl. Treibmittel und anderen Ingredienzien, ein Gas generiert wird, welches das entstehende Polymer aufschäumen lässt. Es ergibt sich im Laufe der Reaktion eine zelluläre Struktur, die durch einen entsprechenden Stabilisator unterstützt wird.

Dabei übernimmt der Stabilisator verschiedene Aufgaben. Er fördert und kontrolliert die Nukleierung der Gasblässchen, wirkt kompatibilisierend bezüglich unverträglicher Komponenten in der Reaktionsmischung und stabilisiert zudem die für den Schaum notwendigen Zellen in ihrer Entstehungsphase bis hin zur vollständigen Aushärtung des Schaums.

Zur Stabilisierung von Polyurethanschäumen als besonders geeignet zeigten sich Blockcopolymere aus Polysiloxanblöcken, welche mit Polyoxyalkyleneinheiten mittels dem Fachmann bekannter Verfahren zu entsprechenden Blockmischpolymerisaten umgesetzt wurden. Je nach gewünschter Schaumeigenschaft finden unterschiedlich aufgebaute Stabilisatoren Verwendung. Um als Polyurethan-Schaumstabilisator brauchbar zu sein, müssen die Polyoxyalkylenblöcke und der Polysiloxanblock im Blockmischpolymerisat in einem ausgewogenen Verhältnis zueinander vorliegen und einen spezifischen, für die jeweilige resultierende Schaumeigenschaft optimierten Aufbau aufweisen.

Polysiloxan-Polyoxyalkylen-Blockmischpolymerisate, welche im durchschnittlichen Molekül unterschiedliche lineare Polyoxyalkylenreste aufweisen, sind bereits ausführlich in der Literatur beschrieben worden. Die Verwendung verzweigter Polyoxyalkylenreste zum Aufbau eines [Polyurethan]Schaumstabilisators hingegen wird nur vereinzelt und meist in Nicht-Polyurethananwendungen beschrieben.

EP2261273 offenbart polyethermodifizierte Siloxane als Schaumstabilisatoren zur Herstellung von Polyurethanschaum.

So wurde in den Patentanmeldungen WO 2010/003611 A1 und WO 2010/003610 A1 die Verwendung von polyhydroxyfunktionellen Polysiloxanen zur Erhöhung der Oberflächenenergie von Thermoplasten beschrieben, die zu einer Verbesserung der Bedruck-/Lackierbarkeit thermoplastischer Materialien und Formmassen führt.

Die WO 2007/075927 A1 befasst sich mit, mit verzweigten Polyethem funktionalisierten Organopolysiloxanen, die aufgrund ihrer erhöhten Hydrophilie im Bereich des Anstrichs zu einer verbesserten Schmutzabweisung führen. In dieser Schrift werden allerdings Polysiloxan-Polyoxyalkylen-Copolymere beschrieben, deren Verzweigung mit Hilfe von Glycidol oder Hydroxyoxetanen lediglich direkt am Polysiloxanrückgrat erfolgt.

In J P 10-316540 wird die Umsetzung von Methyl-Wasserstoff-Siloxanen mit Allyl-Polyglycerinen erläutert. Die entsprechenden Produkte finden ihre Anwendung als Haarkonditionierungsmittel.

Die EP 1 489 128 und US 2005/0261133 beschreiben die Synthesen von Polysiloxanen, die mit Hilfe von (Poly)glycerin modifiziert wurden und sowohl in kosmetischen Formulierungen, als auch als Spreitungsmittel in chemischen Pflanzenschutzformulierungen zum Einsatz kommen können.

Eine weitere Anwendung für mittels Hydroxyoxetan modifizierte Polysiloxane wird in DE 10 2006 031152 erläutert, in der die Produkte ihren Einsatz zur Verbesserung von Trenneigenschaften in polymeren Formmassen finden.

Obwohl eine Vielzahl verschiedenartiger Stabilisatorstrukturen beschrieben wurde, die im Polyurethanschaum eingesetzt werden, gibt es einen Bedarf nach alternativen Schaumstabilisatoren, die, vorzugsweise eingesetzt in geringer Menge, im Schaum stabilisierend wirken, die Eigenschaften von Formulierungen, z.B. den Zusatz von NOPs (natural oil based polyols), Füllstoffen (Calciumcarbonat, Melamin) oder großer Mengen an Treibmittel, tolerieren und/oder dabei keinen negativen Effekt auf die Verarbeitbarkeit und mechanischen Eigenschaften des resultierenden Schaumes haben.

Aufgabe der vorliegenden Erfindung war die Bereitstellung von Schaumsatbilisatoren für Polyurethansysteme, die, vorzugsweise eingesetzt in geringer Menge, im Schaum stabilisierend wirken, die Eigenschaften von Formulierungen, z.B. den Zusatz von NOPs (natural oil based polyols), Füllstoffen (Calciumcarbonat, Melamin) oder großer Mengen an Treibmittel, tolerieren und/oder dabei keinen negativen Effekt auf die Verarbeitbarkeit und mechanischen Eigenschaften des resultierenden Schaumes haben. Insbesondere sollten die Schaumstabilisatoren geeignet sein, die Herstellung stabiler, fein- und je nach Anwendung offen- oder geschlossenzelliger Polyurethanschäume zu ermöglichen.

Überrachenderweise wurde gefunden, dass Verbindungen der Formel (IV), die in der Polyetherkette mindestens eine Verzweigung aufweisen diese Aufgabe lösen.

Gegenstand der vorliegenden Erfindung ist deshalb ein Verfahren zur Herstellung von Polyurethanschäumen, welches dadurch gekennzeichnet ist, dass eine Polysiloxanverbindungen der Formel (IV) als Schaumstabilisatoren verwendet wird.

Ebenfalls Gegenstand der vorliegenden Erfindung ist eine Zusammensetzung, geeignet zur Herstellung von Polyurethanschäumen, die zumindest eine Polyolkomponente, einen Katalysator, der die Ausbildung einer Urethan- oder Isocyanurat-Bindung katalysiert und optional ein Treibmittel aufweist, welche dadurch gekennzeichnet ist, dass sie außerdem eine Polysiloxanverbindungen der Formel (IV) enthält und gegebenenfalls weitere Additive und gegebenenfalls eine Isocyanat-Komponente aufweist.

Außerdem sind Gegenstand der vorliegenden Erfindung Polyurethanschäume, hergestellt durch das erfindungsgemäße Verfahren sowie die Verwendung dieser als oder zur Herstellung von Möbeln, Isolationsmitteln, Verpackungsmaterialien, Kühlschrankisolierungen, Dämmplatten, Sandwichelementen, Rohrisolationen, Sprühschäumen, 1- & 1,5-Komponenten-Dosenschäumen, Holzimitaten, Modellschäumen, Verpackungsschäumen, Matratzen, Möbelpolster, Automobil-Sitzpolster, Kopfstützen, Instrumententafeln, Automobil-Innenverkleidungen, Automobil-Dachhimmel, Schallabsorptionsmaterialien, Lenkräder, Schuhsolen, Teppichrückseitenschäumen, Filterschäumen, Dichtschäumen, Dichtmitteln oder Klebern.

Die erfindungsgemäße Verwendung von Verbindungen der Formel (IV) als Schaumstabilisator hat den Vorteil, dass beispielsweise trotz hohen Ethylenoxid-Anteils innerhalb der Strukturen, diese aufgrund der vorhandenen Verzweigung nicht kristallin werden. Somit ist zum einen eine bessere Verarbeitbarkeit gegeben, zum anderen erschließen sich auch ganz neue Stoffeigenschaften.

Die Erhöhung der OH-Funktionalität beispielsweise führt zu verbesserter Lösemittelkompatibilität.

Außerdem benötigt der Einbau eines verzweigten Polyethers weniger Katalyse, da pro vorhandener Si-H Funktion ein höherer Polyether-Anteil in das Polyethersiloxan eingebaut werden kann.

Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel. Werden nachfolgend Parameter angegeben, die durch Messung bestimmt wurden, so wurden die Messungen, wenn nicht anders angegeben, bei einer Temperatur von 25 °C und einem Druck von 101.325 Pa durchgeführt.

Unter Polyurethanschaum (PU-Schaum) wird im Rahmen der vorliegenden Erfindung Schaum verstanden, der als Reaktionsprodukt basierend auf Isocyanaten und Polyolen bzw. Verbindungen mit Isocyanat-reaktiven Gruppen erhalten wird. Es können hierbei neben dem Namen gebenden Polyurethan auch weitere funktionelle Gruppen gebildet werden, wie z.B. Allophanate, Biurete, Harnstoffe oder Isocyanurate. Daher werden unter PU-Schäumen im Sinne der vorliegenden Erfindung sowohl Polyurethanschäume (PUR-Schäume) als auch Polyisocyanurat-Schäume (PIR-Schäume) verstanden. Bevorzugte Polyurethanschäume sind Polyurethanweichschäume, Polyurethanhartschäume, viskoelastische Schäume, HR-Schäume, halbharte Polyurethanschäume, thermoverformbare Polyurethanschäume oder Integralschäume. Die Bezeichnung Polyurethan ist hierbei als Oberbegriff für ein aus Di- bzw. Polyisocyanaten und Polyolen oder anderen gegenüber Isocyanat reaktiven Spezies, wie z.B. Aminen, hergestelltes Polymer zu verstehen, wobei die Urethan-Bindung nicht ausschließlicher oder überwiegender Bindungstyp sein muss. Auch Polyisocyanurate und Polyharnstoffe sind ausdrücklich mit eingeschlossen.

Das erfindungsgemäße Verfahren zur Herstellung von Polyurethanschäumen, zeichnet sich dadurch aus, dass eine Polysiloxanverbindung der Formel (IV) 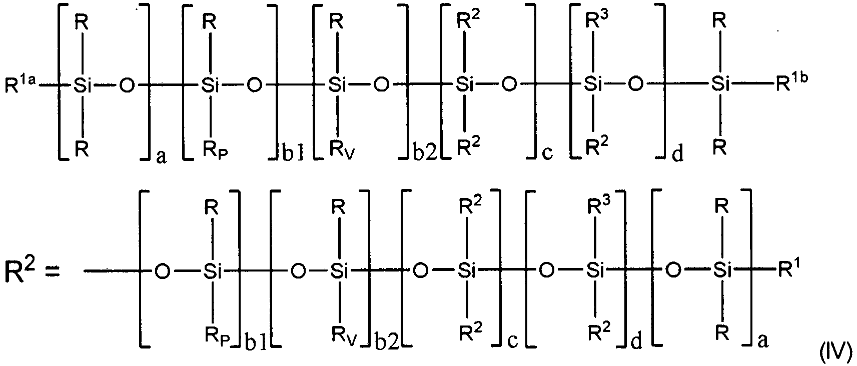 worin
a unabhängig voneinander 0 bis 2000, vorzugsweise 0 bis 1000, insbesondere 1 bis 500 ist,
b1 unabhängig voneinander 0 bis 60, vorzugsweise 0 bis 15, insbesondere 0 oder 1 bis 5 ist,
b2 unabhängig voneinander 0 bis 60, vorzugsweise 0 bis 15, insbesondere 0 oder 1 bis 8 ist,
c unabhängig voneinander 0 bis 10, vorzugsweise 0 bis 6, bevorzugt 0 oder 1 bis 3 ist,
d unabhängig voneinander 0 bis 10, vorzugsweise 0 bis 5, bevorzugt 0 oder 1 bis 3 ist,
R mindestens ein Rest aus der Gruppe linearer, cyclischer oder verzweigter, gesättigter oder ungesättigter Kohlenwasserstoffreste mit t 1 bis z u 2 0 C-Atomen oder aromatischer Kohlenwasserstoffrest mit 6 bis zu 20 C-Atomen, vorzugsweise ein Methylrest, ist,
R¹ unabhängig voneinander R oder-OR⁴ ist,
R^{1a} unabhängig voneinander R, Rᵥ, Rp oder -OR⁴ ist,
R^{1b} unabhängig voneinander R, Rᵥ, R_{P} oder -OR⁴ ist,
R³ unabhängig voneinander R oder ein ggf. mit Heteroatomen substituierter, gesättigter oder ungesättigter, organischer Rest, vorzugsweise ausgewählt aus der Gruppe der Alkyl-, Aryl-, Chloralkyl-, Chloraryl-, F I uoralkyl-, Cyanoalkyl-, Acryloxyaryl-, Acryloxyalkyl-, Methacryloxyalkyl-, Methacryloxypropyl- oder Vinyl-Reste, ist, besonders bevorzugt ein Methyl-, Chlorpropyl-, Vinyl- oder ein Methacryloxypropyl-Rest ist,
R⁴ unabhängig voneinander Alkylrest mit 1 bis 10 Kohlenstoffatomen, vorzugsweise Methyl-, Ethyl oder Isopropylrest,
R_{P} unabhängig voneinander -OR⁴, Wasserstoff oder über Si-C-Bindungen gebundene unverzweigte Polyetherreste aus Alkylenoxid-Einheiten mit 1-30 Kohlenstoffatomen, aus Arylenoxid-Einheiten und/oder aus Glycidylether-Einheiten mit einem gewichtsmittleren Molekulargewicht zwischen 200 und 30000 g/mol und/oder über Si-C-Bindungen gebundener aliphatischer und/oder cycloaliphatischer und/oder aromatischer Polyester- oder Polyetheresterrest mit einem gewichtsmittleren Molekulargewicht zwischen 200 und 30000 g/mol,
Rᵥ gleiche oder verschiedene verzweigte Polyethercarbonatreste, die mindestens eine Verzweigungseinheit enthalten, die auf Hydroxyoxetan, Glycerincarbonat oder Glycidol basiert, und ggf. weitere Einheiten, die auf Alkylenoxiden und/oder Lactonen, und/oder Anhydriden, und/oder Glycidylethem basieren, aufweisen, vorzugsweise ist Rᵥ ein über eine Si-C-Bindung angebundener Rest der Formel (la)

   -Z'(-Q-M1ᵢ₁-M2ᵢ₂-M3ᵢ₃-Mᵢ₄-M5ᵢ₅-M6ᵢ₆-M7ᵢ₇-M8ᵢ₈-M9ᵢ₉-M10ᵢ₁₀-M11ᵢ₁₁-M12ᵢ₁₂-M13ᵢ₁₃-Jᵢ₁₄)ᵢ(Q-J)ₖ (Ia)
wobei
i = 1 bis 10, vorzugsweise 1 bis 5, bevorzugt 2 bis 3,
k = 0 bis 9, vorzugsweise 0 bis 5, bevorzugt 0 oder 1 bis 3,
i + k = 1 bis 10, bevorzugt 1 bis 5, besonders bevorzugt von 1 bis 3,
i1 bis i14 = jeweils unabhängig voneinander 0 bis 500, vorzugsweise 0,1 bis 100 und insbesondere bevorzugt 1 bis 30
Q = gleich oder verschieden O, NH, N-Alkyl, N-Aryl oder S, bevorzugt O oder NH, besonders bevorzugt O,
Z' = beliebiger organischer Rest, wobei jedes Q direkt mit einem Kohlenstoffatom des organischen Restes verknüpft ist, vorzugsweise linearer, cyclischer oder verzweigter, aliphatischer oder aromatischer Kohlenwasserstoffrest, der auch Heteroatome, sowie weitere substituierte, funktionelle, organische, gesättigte oder ungesättigte Reste enthalten kann,
J = unabhängig voneinander Wasserstoff, ein linearer, cyclischer oder verzweigter, aliphatischer oder aromatischer, gesättigter oder ungesättigter Kohlenwasserstoffrest mit 1 bis zu 30 C-Atomen, ein Carbonsäurerest mit 1 bis 30 Kohlenstoffatomen oder ein mit Heteroatomen substituierter, funktioneller, organischer, gesättigter oder ungesättigter Rest, vorzugsweise Wasserstoff, linearer oder verzweigter, gesättigter Kohlenwasserstoffrest mit 1 bis 18 Kohlenstoffatomen oder ein Carbonsäurerest mit 1 bis 10 Kohlenstoffatomen, bevorzugt handelt es sich bei dem Rest J um ein Wasserstoffatom, einen Methyl- oder Acetyl-Rest, 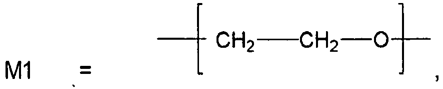 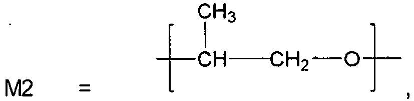 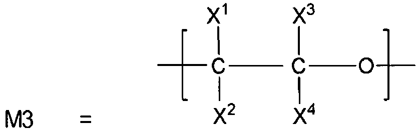 wobei X¹ bis X⁴ unabhängig voneinander Wasserstoff oder lineare, cyclische oder verzweigte, aliphatische oder aromatische, gesättigte oder ungesättigte Kohlenwasserstoffreste mit 1 bis zu 50 C-Atomen, vorzugsweise mit 2 bis 50 C-Atomen, sind, die gegebenenfalls Halogenatome enthalten können, mit der Maßgabe, dass X¹ bis X⁴ nicht so gewählt sind, dass M3 gleich M1 oder M2 ist, 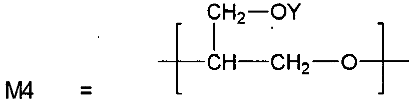 wobei Y unabhängig voneinander ein linearer, cyclischer oder verzweigter, aliphatischer oder aromatischer, gesättigter oder ungesättigter Kohlenwasserstoffrest mit 2 bis zu 30 C-Atomen ist, der auch Heteroatome enthalten kann, 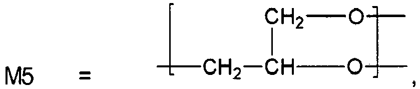 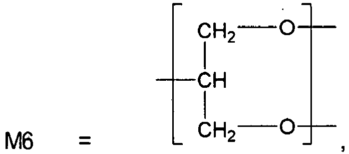 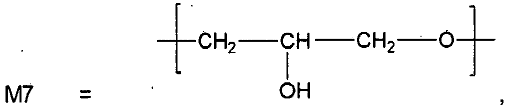 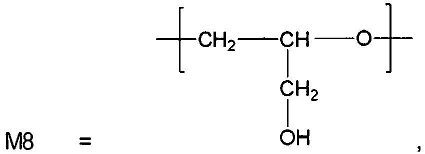 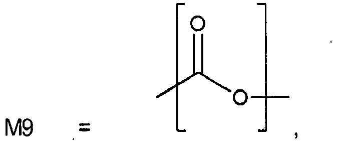 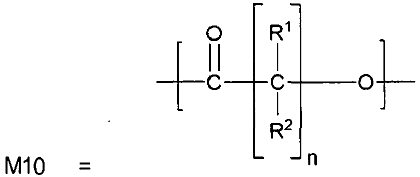 wobei R¹ und R² unabhängig voneinander entweder Wasserstoff, Alkyl-, Alkoxy-, Aryl- oder Aralkylgruppe, vorzugsweise mit 1 bis 15 Kohlenstoffatomen, sind, sowie n unabhängig voneinander 3 bis 8, wobei n, R¹ und R² in jeder Einheit M10 gleich oder unterschiedlich sein können, 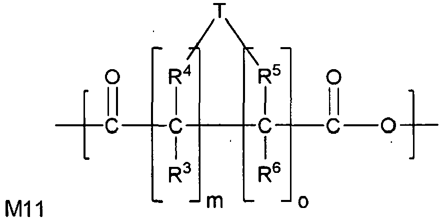 wobei R³, R⁴, R⁵ und R⁶ unabhängig voneinander entweder Wasserstoff, Alkyl-, Alkenyl-, Alkyliden-, Alkoxy-, Aryl- oder Aralkylgruppen sind, und die Reste R⁴ und R⁵ cycloaliphatisch oder aromatisch über das Fragment T verbrückt sein können, gegebenenfalls können die Reste R³ und R⁶ auch eine Bindung bilden (wenn m = o = 1, führt dies zu einer Doppelbindung), m und o unabhängig voneinander 1 bis 8 sein können, wobei die Einheiten mit den Indizes m und o beliebig angeordnet sein können, und bevorzugt 1 sind, T einen divalenten Alkylen- oder Alkenylenrest darstellt (vorzugsweise ist dann m = o = 1) und die Indizes m und o wie auch die Reste T, R³, R⁴, R⁵ und R⁶ in jeder Einheit M11 gleich oder unterschiedlich sein können, 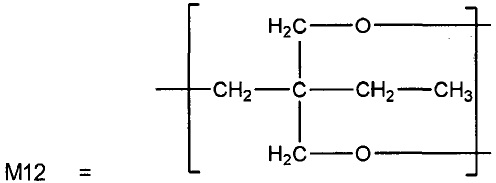 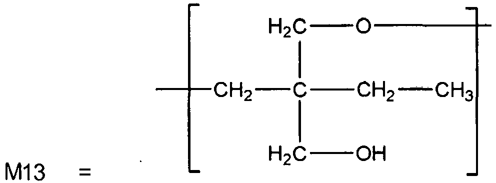 wobei die Monomereinheiten M1 bis M13 in beliebigen Verhältnissen, sowohl blockweise, alternierend oder statistisch angeordnet sein können, als auch einen Verteilungsgradienten aufweisen können und wobei die Monomereinheiten M1 bis M13, insbesondere die Einheiten M1 bis M4 frei permutierbar sind, mit den Maßgaben, dass mindestens eine Einheit M12, M5 oder M6 enthalten ist, bei der sich an keinem Ende direkt ein Rest J und an jedem Ende mindestens eine Einheit ausgewählt aus M1, M2 und M3 anschließt, und dass zwei Monomereinheiten des Typs M9 nicht aufeinanderfolgen, wobei im Mittel mindestens ein Rest Rᵥ pro Molekül der Formel (IV) vorhanden ist,
   mit der Maßgabe, dass die Summe aus b1 und b2 = b ist, dass pro Molekül der Formel (IV) die mittlere Anzahl Σa der D-Einheiten pro Molekül nicht größer als 2000, vorzugsweise nicht größer als 1000 und bevorzugt nicht größer als 500, und die mittlere Anzahl Σb der R_{P} und R_{V} tragenden Einheiten pro Molekül nicht größer als 100 ist, vorzugsweise nicht größer als 60 ist, die mittlere Anzahl Σc+d pro Molekül nicht größer als 20 ist, vorzugsweise nicht größer als 10 und bevorzugt nicht größer als 5 ist, und
   gemittelt über alle erhaltenen Verbindungen der Formel (IV) höchstens 20 mol% der Reste R_{P}, R¹, R^{1a} oder R^{1b}, bevorzugt weniger als 10 mol%, insbesondere bevorzugt 0 mol% der Reste R_{P}, R¹, R^{1a} oder R^{1b}, vom Typ -OR⁴ sind, als Schaumstabilisator verwendet wird.

Die Verbindungen der Formel (IV) lassen sich im Sinne der Erfindung durch die folgende Formel (X) ausdrücken.

Die erfindungsgemäßen Polysiloxanverbindungen der Formel (X)

[M¹]ₘ₁ [M^{a}]ₘₐ [M^{b}]_{mb} [D]ₐ [D^{v}]_{b1} [D^{R}]_{b2} [T]_{d} [Q]_{c} Formel (X)

zeichnen sich dadurch aus, dass
- M^{a}: = [R^{1a}] ist
- M¹: = [R¹] ist
- M^{b}: = [SiR₂R^{1b}O_{0/2}] ist
- D: = [SiR₂O_{2/2} ist
- D^{V}: = [SiRR^{V}O_{2/2}] ist
- D^{R}: = [SiRR^{P}O_{2/2}] ist
- T: = [SiR³O_{3/2}] ist
- Q: = [SiO_{4/2}] ist
- m1: = 2c + d ist
- ma: = mb =1 ist
- a: = 0 bis 2000, vorzugsweise 0 bis 1000, insbesondere 1 bis 500 ist,
- b1: = 0 bis 60, vorzugsweise 0 bis 15, insbesondere 0 oder 1 bis 5 ist,
- b2: = 0 bis 60, vorzugsweise 0 bis 15, insbesondere 0 oder 1 bis 8 ist,
- b1 + b2: = b; Summe Σb nicht größer als 100, bevorzug nicht größer als 60 ist,
- d: = 0 bis 10, vorzugsweise 0 bis 5, bevorzugt 0 oder 1 bis 3 ist,
- c: = 0 bis 10, vorzugsweise 0 bis 6, bevorzugt 0 oder 1 bis 3 ist, Summe Σc+d nicht größer als 20, vorzugsweise nicht größer als 10 und bevorzugt nicht größer als 5 ist,
wobei die Angaben zu den Indizes m1, m2, a, b1, b2, b, Σb, d, c, Σc+d mittlere Angaben pro Molekül der Formel (X) darstellen,

Bei den Verbindungen der Formel (IV) bzw. (X) kann es sich um statistische Copolymere, alternierende Copolymere oder um Blockcopolymere handeln. Auch kann durch die Abfolge der Seitenketten entlang des Silikonrückgrats ein Gradient gebildet werden.

Die a Einheiten der Formel 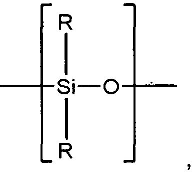 die b1 Einheiten der Formel 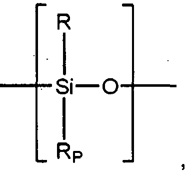 die b2 Einheiten der Formel 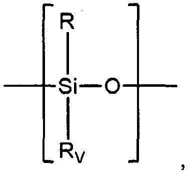 die c Einheiten der Formel 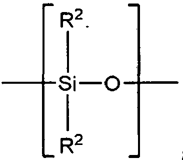 als auch
die d Einheiten der Formel 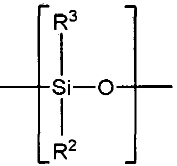 können in der Polysiloxankette der Formeln (IV) bzw. (X), soweit vorhanden, in beliebiger Reihenfolge angeordnet sein.

Besonders bevorzugt ist in den Formeln (IV) bzw. (X) a > 0, b ≥ 2 und R¹ = R^{1a} = R^{1b}.

Vorzugsweise ist i9 > 0, vorzugsweise von 0,1 bis 100, bevorzugt 0,5 bis 50 und besonders bevorzugt 1 bis 10.

Die Polysiloxanverbindungen weisen vorzugsweise eine solche Struktur der Formel (IV) bzw. (X) auf, bei der Σ i5 + i6 ≥ i + 1, bevorzugt Σ i12 + i5 + i6 ≥ i + 1 ist.

Der Rest Rᵥ weist vorzugsweise mindestens eine Struktureinheit auf, die dadurch entsteht, dass die Monomereinheit M9 direkt mit einer Einheit M5, M6, M7 oder M8 verknüpft ist.

Die Anzahl der Reste J in Rᵥ ist von der Anzahl der Verzweigungen, also der Anzahl der Einheiten M12, M5 und M6 sowie den Indizes i und k abhängig. Der Index i14 ist abhängig von der Anzahl der Einheiten mit dem Index i12, i5 und i6 und genügt vorzugsweise der Bedingung i14 = 1 + (i12 + i5 + i6).

Durch unterschiedliche Anteile an M1 und M2 im Rest R_{V} können die Eigenschaften des erfindungsgemäßen Polysiloxans beeinflusst werden. So kann speziell wegen der größeren Hydrophobie der M2-Einheiten im Vergleich zu den M1-Einheiten durch die Wahl geeigneter M1:M2-Verhältnisse die Hydrophobie oder respektive die Hydrophilie des erfindungsgemäßen Polysiloxans gesteuert werden.

Als Substituenten können die Kohlenwasserstoffreste Z' bevorzugt Halogene aufweisen. Als Heteroatome können die Kohlenwasserstoffreste Z' insbesondere Stickstoff und/oder Sauerstoff, bevorzugt Sauerstoff aufweisen. Besonders bevorzugte Kohlenwasserstoffreste Z' weisen keine Substituenten und keine Heteroatome auf und weisen ganz besonders bevorzugt 2 bis 20 Kohlenstoffatome auf.

Verbindungen der allgemeinen Formel (IV) bzw. (X), bei welchen b1 mindestens 1 ist, werden vorteilhaft in solchen Systemen eingesetzt, die einer Verträglichkeitsanpassung bedürfen, ist b1 jedoch gleich null kann eine nötige Anpassung der Verträglichkeit auch durch den intrinsischen Aufbau des verzweigten Polyethercarbonats erreicht werden.

Besonders bevorzugte Verbindungen der Formel (IV) bzw. (X) sind solche, bei denen zwei oder mehr der genannten Vorzugsbereiche, bevorzugt alle Vorzugsbereiche kombiniert sind.

Die erfindungsgemäß verwendeten Polysiloxanverbindungen der Formel (IV) bzw. (X) sind vorzugsweise erhältlich durch das nachfolgend beschriebene Verfahren.

Die Bezeichnung "verzweigter Polyether" steht vorzugsweise für einen Polyether, bevorzugt für ein Polyethercarbonat, in dem sowohl die Hauptkette als auch mindestens eine Seitenkette Polyether- und ggf. Polyethercarbonatstrukturen enthält.

Dieses Verfahren zeichnet sich dadurch aus, dass es die folgenden Schritte aufweist:
(a) Bereitstellen von verzweigten Polyethern, die mindestens eine olefinisch ungesättigte Gruppe, mindestens eine Verzweigung (Einheit M12, M5 oder M6) und vorzugsweise mindestens eine Struktureinheit -O-C(O)-O- aufweisen,
(b) Bereitstellen von SiH-funktionellen Siloxanen, und
(c) Umsetzung der SiH-funktionellen Siloxane aus (b) mit den verzweigten Polyethern mit mindestens einer olefinisch ungesättigten Gruppe aus Schritt (a) unter Ausbildung von SiC-Verknüpfungen.

### Schritt (a):

Als verzweigte Polyether, die mindestens eine olefinisch ungesättigte Gruppe und vorzugsweise mindestens eine Struktureinheit -O-C(O)-O- aufweisen werden vorzugsweise Polyether der Formel (I) Z(-Q-M1ᵢ₁-M2ᵢ₂-M3ᵢ₃-M4ᵢ₄-M5ᵢ₅-M6ᵢ₆-M7ᵢ₇-M8ᵢ₈-M9ᵢ₉-M10ᵢ₁₀-M11ᵢ₁₁-M12ᵢ₁₂-M13ᵢ₁₃-Jᵢ₁₄)ᵢ(Q-J)ₖ (I) bereitgestellt/eingesetzt, wobei
i = 1 bis 10, vorzugsweise 1 bis 5, bevorzugt 1,
k = 0 bis 9, vorzugsweise 0 bis 5, bevorzugt 0 oder 1 bis 3,
i + k = 1 bis 10, bevorzugt 1 bis 5, besonders bevorzugt 1,
i1 bis i12 = jeweils unabhängig voneinander 0 bis 500, vorzugsweise 0 bis 100 und insbesondere bevorzugt 0,1 bis 30,
Z = beliebiger organischer, terminal ungesättigter, Rest, vorzugsweise terminal ungesättigter, linearer, cyclischer oder verzweigter, aliphatischer oder aromatischer Kohlenwasserstoffrest, der auch Heteroatome, sowie weitere substituierte, funktionelle, organische, gesättigte oder ungesättigte Reste enthalten kann,
Q = O, NH, N-Alkyl, N-Aryl oder S, bevorzugt O oder NH, besonders bevorzugt O,
J = unabhängig voneinander Wasserstoff, ein linearer, cyclischer oder verzweigter, aliphatischer oder aromatischer, gesättigter oder ungesättigter Kohlenwasserstoffrest mit 1 bis zu 30 C-Atomen, ein Carbonsäurerest mit 1 bis 30 Kohlenstoffatomen oder ein mit Heteroatomen substituierter, funktioneller, organischer, gesättigter oder ungesättigter Rest, vorzugsweise Wasserstoff, linearer oder verzweigter, gesättigter Kohlenwasserstoffrest mit 1 bis 18 Kohlenstoffatomen oder ein Carbonsäurerest mit 1 bis 10 Kohlenstoffatomen, bevorzugt handelt es sich bei dem Rest J um ein Wasserstoffatom, einen Methyl- oder Acetyl-Rest,

M1 bis M13 sind wie oben in Formel (la) definiert, wobei die Monomere M1 bis M13 in beliebigen Verhältnissen, sowohl blockweise, alternierend oder statistisch angeordnet sein können, als auch einen Verteilungsgradienten aufweisen können und wobei insbesondere die Monomere M1 bis M4 frei permutierbar sind, mit den Maßgaben, dass vorzugsweise mindestens eine Einheit M12, M5 oder M6 enthalten ist, bei der sich an keinem Ende direkt ein Rest J anschließt, und dass zwei Monomereinheiten des Typs M9 nicht aufeinanderfolgen.

Vorzugsweise ist i9 > 0, vorzugsweise von 0,1 bis 100, bevorzugt 0,5 bis 50 und besonders bevorzugt 1 bis 10.

Bevorzugt ist der Rest J in Formel (I) ein Wasserstoffatom, ein Methyl- oder Acetyl-Rest. Die Summe Σ i5 bis i13 ist vorzugsweise ≥ i + 1, bevorzugt ≥ i + 2. Der Index i14 ist abhängig von der Anzahl der Einheiten mit dem Index i12, i5 und i6 und genügt vorzugsweise der Bedingung i14 = 1 + (i12 + i5 + i6).

Der verzweigte Polyether der Formel (I) weist vorzugsweise mindestens eine Struktureinheit auf, die dadurch entsteht, dass die Monomereinheit M9 direkt mit einer Einheit M5, M6, M7 oder M8 verknüpft ist.

Die Anzahl der Reste J im Polyether der Formel (I) ist von der Anzahl der Verzweigungen, also der Anzahl der Einheiten M5, M6 und M12 sowie den Indizes i und k abhängig.

Als Substituenten können die Kohlenwasserstoffreste Z bevorzugt Halogene aufweisen. Als Heteroatome können die Kohlenwasserstoffreste Z insbesondere Stickstoff und/oder Sauerstoff, bevorzugt Sauerstoff aufweisen. Besonders bevorzugte Kohlenwasserstoffreste Z weisen keine Substituenten und keine Heteroatome auf und weisen ganz besonders bevorzugt 2 bis 20 Kohlenstoffatome auf.

Vorzugsweise bildet eine der Monomereinheiten M1, M2, M7 oder M8, bevorzugt M1 oder M2 das letzte Glied einer Monomerkette.

Es kann besonders vorteilhaft sein, wenn i1 größer 0 ist und i2, i3 und i4 gleich 0 sind.

Der zu hydrosilylierende, verzweigte Polyether ist vorzugsweise aus einem geeigneten Starter und diversen Monomereinheiten M aufgebaut.

Die Bereitstellung der verzweigten Polyether, insbesondere der verzweigten Polyether der Formel (I), erfolgt vorzugsweise dadurch, dass Starter der allgemeinen Formel (II)

Z(Q-H)ⱼ (II)

mit
Q = O, NH, N-Alkyl, N-Aryl oder S, bevorzugt O oder NH, besonders bevorzugt O,
j = 1-10, bevorzugt 1 bis 5, besonders bevorzugt 1 bis 3,
und Z wie oben definiert,
alkoxyliert (polymerisiert) werden, wobei als (Alkoxylierungs-)Reagenz mindestens ein Verzweiger, vorzugsweise Glycerincarbonat, Hydroxyoxetan oder Glycidol, bevorzugt Glycerincarbonat, sowie vorzugsweise ein vom Verzweiger verschiedenes Reagenz, insbesondere ein Alkylenoxid eingesetzt wird.

Wird als Reagenz ausschließlich Glycerincarbonat eingesetzt, so stellt der Starter Z(Q-H)ⱼ vorzugsweise einen Polyetheralkohol dar.

Der Starter (II) ist vorzugsweise eine Alkyl-, Aryl- oder Aralkyl-Verbindung mit j = 1 bis 3, die α-hydroxyfunktionell und ω-ungesättigt ist. Vorzugsweise handelt es sich bei den Startern (II) um Alkyl-, Aryl- oder Aralkyl-Verbindungen mit j = 1 bis 5, vorzugsweise j = 1 bis 3, die α-(Q-H)-funktionell, vorzugsweise α-hydroxy-funktionell und ω-ungesättigt sind. Bei solchen Startern handelt es sich vorzugsweise um (meth)allylische Verbindung. Wird der Begriff "(meth)allylisch" verwendet, so umfasst dieser jeweils "allylisch" und "methallylisch". Wenn im Rahmen dieser Erfindung von allylischen Startern gesprochen wird, umfasst dieser Begriff immer auch die methallylischen Analoga, wobei die allylischen Verbindungen als Starter jeweils bevorzugt sind.

Werden als Starter (II) solche mit j = 1 eingesetzt, so weisen diese vorzugsweise eine Struktur der allgemeinen Formel (II) mit Q = O auf.

Bevorzugt eingesetzt werden Starter der allgemeinen Formel (II) mit Z = CH₂=CH-CH₂-QH, CH₂=CH-CH₂-O-CH₂-CH₂-QH, CH₂=CH-QH, CH₂=CH-(CH₂)₄-QH oder CH₂=CH-(CH₂)₉-QH wobei Q vorzugsweise jeweils O ist, oder Z = mit einem der genannten Starter gestarteter Polyether, wie z. B. Allylalkohol gestartete Polymerisate von Ethylenoxid und/oder Propylenoxid und/oder weiteren Alkylenoxiden und/oder Glycidylethern.

Besonders bevorzugt werden als mono-hydroxyfunktionelle allylische Starter der Formel (II) Allylalkohol oder 2-Allyloxyethanol, ganz besonders bevorzugt Allylalkohol eingesetzt. Eingesetzt werden können aber auch die entsprechenden Methallyl-Verbindungen, wie z. B. Methallylalkohol oder Methallylpolyalkylenoxide.

Beispiele für mono-hydroxyfunktionelle Starter der Formel (II), die einen aromatischen Rest Z aufweisen, sind z. B. Allyl- bzw. Methallyl-substituierte Phenolderivate.

Beispiele für vorzugsweise verwendete α-Hydroxy-ω-Alkenyl-substituierte Starter sind insbesondere 5-Hexen-1-ol und 10-Undecen-1-ol, wobei 5-Hexen-1-ol besonders bevorzugt ist.

Beispiele für geeignete cyclische ungesättigte, hydroxy-funktionelle Verbindungen sind z.B. 2-Cyclohexen-1-ol, 1-Methyl-4-isopropenyl-6-cyclohexen-2-ol und 5-Norbomen-2-methanol.

Wie aus der Formel (II) ersichtlich können auch Starter, insbesondere allylische Starter gemäß Formel (II) mit j > 1 eingesetzt werden, wie z. B. dihydroxy-funktionelle (j = 2), trihydroxy-funktionelle (j = 3) oder auch polyhydroxy-funktionelle (j > 3) Starter. Diese weisen mit zunehmender Hydroxy-Funktionalität erhöhte Polydispersitäten auf, was die physikalischen Eigenschaften der Endprodukte auch vorteilhaft beeinflussen kann. So führt z. B. ein höherer Anteil an Verzweigungen zu einer geringeren Viskosität der erhaltenen Produkte.

Bei derartigen mehrfach Hydroxy-funktionellen Startern handelt es sich bevorzugt um monoallylisch veretherte Di-, Tri- oder Polyole, wie z.B. Monoallylether des Glycerins, des Trimethylolethans und Trimethylolpropans, Monoallyl- oder Mono(methallyl)-Ether des Di(trimethylol)ethans, Di(trimethylol)propans und Pentaerythritols. Besonders bevorzugt ist der Starter gemäß Formel (II) mit j > 1 abgeleitet von einer Verbindung aus der Gruppe umfassend 5,5-Dihydroxymethyl-1,3-dioxan, 2-Methyl-1,3-propandiol, 2-Methyl-2-ethyl-1,3-propandiol, 2-Ethyl-2-butyl-1,3-propandiol, Neopentylglykol, Dimethylpropan, Glycerin, Trimethylolethan, Trimethylolpropan, Diglycerin, Di(trimethylolethan), Di(trimethylolpropan), Pentaerythritol, Di(pentaerythritol), Anhydroenneaheptitol, Sorbitol and Mannitol. Ganz besonders bevorzugt werden als di- oder poly-hydroxyfunktionelle allylische Startverbindungen Trimethylolpropanmonoallylether oder Glycerinmonoallylether eingesetzt.

Als mehrfach hydroxyfunktionelle Starter der Formel (II) können auch cyclische, polyhydroxyfunktionelle Startverbindungen wie z. B. 5-Norbomen-2-dimethanol und 5-Norbomen-2,3-dimethanol eingesetzt werden.

Die Herstellung der verzweigten Polyether erfolgt vorzugsweise so, dass der Starter mit einem oder mehreren Alkylenoxid(en), mit einem oder mehreren Verzweigern und ggf. mit einem oder mehreren Glycidylethern umgesetzt wird. Diese Umsetzung kann unter Verwendung der jeweiligen Reinstoffe erfolgen oder unter Verwendung von Mischungen eines oder mehrerer der Edukte. Die Reihenfolge der Umsetzungsschritte kann beliebig erfolgen, so dass sowohl statistische Strukturen bzw. willkürliche Aufbauten des Polyethergerüstes als auch gradientartige oder blockartige Aufbauten erhalten werden können.

Der mit einer hydrosilylierbaren Gruppe versehene, verzweigte Polyether ist über einen dreistufigen, ringöffnenden Polymerisationsprozess in der Eintopffahrweise darstellbar. Die Herstellung der verzweigten Polyether erfolgt vorzugsweise so, dass zunächst der Starter mit einem oder mehreren Alkylenoxiden, die von den Verzweigern verschieden sind, umgesetzt wird, dass dann eine Umsetzung mit Verzweigern, insbesondere Glycerincarbonat, Hydroxyoxetan oder Glycidol erfolgt und anschließend vorzugsweise noch eine weitere Umsetzung mit Alkylenoxiden, die von den Verzweigern verschieden sind, und/oder Glycidylethem erfolgt. Die Schritte können auch mehrfach wiederholt werden.

Selbstverständlich lässt sich das Verfahren auch nach jedem der drei Prozessschritte unterbrechen. Das jeweilige intermediär erhaltene Produkt kann abgefüllt und bis zur weiteren Umsetzung gelagert werden, aber auch in demselben oder einem anderen geeigneten Reaktionsgefäß weiter umgesetzt werden. Die Prozessschritte müssen nicht unmittelbar nach einander durchgeführt werden, jedoch kann sich eine zu lange Lagerungszeit der Zwischenstufen negativ auf die Qualität des Endproduktes auswirken.

Wird als Starter ein Allylpolyether eingesetzt, so kann gegebenenfalls auf den ersten Alkoxylierungsschritt verzichtet werden.

Um den Erhalt gut definierter Strukturen zu gewährleisten, wird die Umsetzung vorzugsweise als eine anionische ringöffnende Polymerisation unter kontrollierter Monomerzugabe durchgeführt.

Die gleichzeitige Anlagerung von Alkylenoxiden und/oder Glycidylethem mit Verzweigern, insbesondere Glycerincarbonat ist ebenfalls durchführbar, aber aufgrund des Druckaufbaus infolge der CO₂-Freisetzung während der Glycerincarbonat-Umsetzung jedoch weniger bevorzugt. Vorzugsweise erfolgt deshalb keine gleichzeitige Anlagerung von Glycerincarbonat und Alkylenoxiden und/oder Glycidylethern.

Als Alkylenoxide können generell alle dem Fachmann bekannten Alkylenoxide, rein oder in beliebigen Mischungen, eingesetzt werden, die zu den in Formel (I) definierten Monomereinheiten M1, M2 oder M3 führen. Bevorzugt werden Ethylenoxid, Propylenoxid, 1,2-Butylenoxid, 2,3-Butylenoxid, Isobutylenoxid, Octen-1-oxid, Decen-1-oxid, Dodecen-1-oxid, Tetradecen-1-oxid, Hexadecen-1-oxid, Octadecen-1-oxid, C20/28-Epoxid, α-Pinenepoxid, Cyclohexenoxid, 3-Perfluoroalky-1,2-Epoxypropan und Styroloxid eingesetzt. Besonders bevorzugt werden Ethylenoxid, Propylenoxid, Dodecen-1-oxid und Styroloxid eingesetzt. Ganz besonders bevorzugt werden Ethylenoxid und Propylenoxid eingesetzt, die den in Formel (I) definierten Monomereinheiten M1 bzw. M2 entsprechen.

Aus evtl. eingesetzten Glycidylethem resultieren die in Formel (I) genannten Monomereinheiten M4, die Alkyl-, Aryl-, Alkaryl- oder Alkoxy-substituiert sein können. Der Ausdruck "Alkyl" steht hier vorzugsweise für lineare oder verzweigte C₁-C₃₀-, wie zum Beispiel C₁-C₁₂- oder C₁-C₈-, -Alkyle oder -Alkenyle. Besonders bevorzugt steht der Ausdruck "Alkyl" für Methyl, Ethyl, Propyl, Butyl, tert-Butyl-, 2-Ethylhexyl, Allyl und C₁₂-C₁₄. Der Ausdruck "Aryl" steht vorzugsweise für, Phenyl-glycidylether und der Ausdruck "Alkaryl" vorzugsweise für o-Kresylglycidylether, p-tert-Butyl-Phenylglycidylether oder Benzylglycidylether. Der Ausdruck "Alkoxy" steht vorzugsweise für Methoxy, Ethoxy, Propoxy, Butoxy, Phenylethoxy und umfasst zwischen 1 und bis zu 30 Alkoxy-Einheiten oder eine Kombination von zwei oder mehr Alkoxy-Einheiten.

Es können auch polyfunktionelle Glycidylether, wie z. B. 1,4-Butandioldiglycidylether, 1,6-Hexandioldiglycidylether, Cyclohexandimethanoldiglycidylether, Neopentylglykoldiglycidylether, Polypropylenglykoldiglycidylether, Polyethylenglykoldiglycidylether, Polyglycerin-3-Glycidether, Glycerintriglycidether, Trimethylolpropantriglycidylether oder Pentraerythrittetraglycidylether zur Herstellung der verzweigten Polyethercarbonate eingesetzt werden. Der Einsatz derartiger tri- oder tetra-funktionellen Monomere führt auch zum Aufbau verzweigter Strukturelemente.

Um verzweigte Polyether mit den Monomereinheiten M10 und M11 aufzubauen, können Polyetherestercopolymere aus Alkylenoxiden und Lactonen und/oder Säureanhydriden in das Polyethercarbonat-Grundgerüst eingebaut werden. Derartige Copolymere sind aus dem Stand der Technik bekannt. Copolymere aus Alkylenoxiden und Lactonen werden in den folgenden Schriften beschrieben, z. B. US 2,962,524, US 3,312,753, US 3,689,531, US 4,291,155, US 5,525,702, US 3,689,531, US 3,795,701, US 2,962,524, EP 2 093 244. Copolymere aus Alkylenoxiden und cyclischen Anhydriden werden z. B. in den folgenden Schriften beschrieben DE 69532462, US 4,171,423, US 3,374,208, US 3,257,477, EP 2 093 244. Alle zuvor genannten Schriften und die darin als Stand der Technik zitierten Schriften werden hiermit als Referenz eingeführt und gelten als Teil des Offenbarungsgehaltes der vorliegenden Erfindung.

Die diskutierten Polyetherestercopolymere können nach den in den oben genannten Patenten beschriebenen Verfahren hergestellt werden und als Starter für die Synthese von verzweigten Polyethercarbonaten eingesetzt werde. Prinzipiell ist es jedoch auch möglich, dass zunächst aus einem beliebigen Startalkohol mit Alkylenoxiden und Glycerincarbonat ein verzweigtes Polyethercarbonat hergestellt wird, welches dann im folgenden nach den in der zuvor zitierten Patentliteratur beschriebenen Umsetzungen zu Polyetherestercopolymeren umgesetzt wird.

Werden als zur ringöffnenden Polymerisation geeignete Edukte Lactone eingesetzt, so werden vorzugsweise solche der Formel (III) eingesetzt. 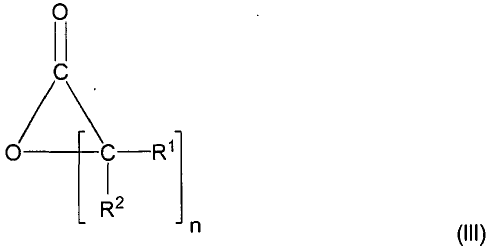 wobei R¹ und R² unabhängig voneinander Wasserstoff, Alkyl-, Alkoxy-, Aryl- oder Aralkylgruppen sein können, sowie n = 3 bis 8, die unter Ringöffnungspolymerisation zu Polyetherestercarbonaten copolymerisiert werden.

Geeignete Lactone sind vorzugsweise ausgewählt aus der Gruppe umfassend γ-Butyrolacton, δ-Valerolacton, ε-Caprolacton, ζ-Enantholacton, η-Caprylolacton, Methyl-ε-caprolacton, Dimethyl-ε-caprolacton, Trimethyl-ε-aprolacton, Ethyl-ε-caprolacton, Isopropyl-ε-caprolacton, n-Butyl-ε-caprolacton, Dodecyl-ε-caprolacton, Methyl-ζ-enantholacton, Methoxy-ε-caprolacton, Dimethoxy-ε-caprolacton und Ethoxy-ε-caprolacton. Bevorzugt werden ε-Caprolacton, Methyl-ε-caprolacton und Trimethyl-ε-caprolacton eingesetzt, besonders bevorzugt ε-Caprolacton.

Werden als Edukte zur ringöffnenden Polymerisation cyclische Anhydride eingesetzt, so werden vorzugsweise solche der Formel (V) eingesetzt. 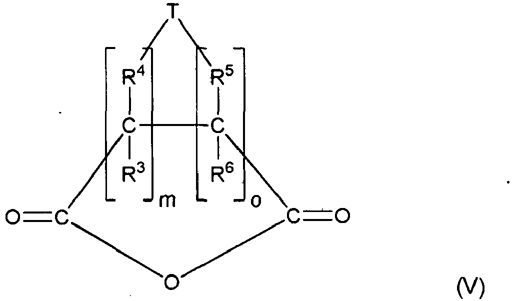 wobei R³, R⁴, R⁵ und R⁶ unabhängig voneinander Wasserstoff und/oder ein organischer Rest, bevorzugt H, Alkyl-, Alkenyl-, Alkyliden-, Alkoxy-, Aryl- und/oder Aralkylgruppen sein können, m und o wie oben definiert sind, gegebenenfalls können R³ und/oder R⁶ auch nicht vorhanden sein, gegebenenfalls können die Reste R³ und R⁶ auch eine Bindung bilden (wenn m = o = 1), sodass z. B. eine Doppelbindung entstehen kann, weiterhin können die Kohlenwasserstoffreste R⁴ und R⁵ cycloaliphatisch oder aromatisch über das Fragment T verbrückt sein (m = o = 1) und T kann sowohl einen divalenten Alkylen- als auch Alkenylenrest darstellen, der weiter substituiert sein kann, weiterhin kann ggf ein Rest R³, R⁴, R⁵ oder R⁶ nicht vorhanden sein, z.B. im Falle einer der organischen Reste ein Alkylidenrest ist, ist der jeweilige geminale Rest nicht vorhanden, ist z.B. R³ gleich Methyliden (=CH₂), so ist R⁴ nicht vorhanden. Beispiele für bevorzugte cyclische Anhydride sind Succinanhydrid, Maleinsäureanhydrid, Itaconanhydrid, Glutaranhydrid, Adipinanhydrid, Citraconanhydrid, Phthalsäureanhydrid, Hexahydrophthalsäure-anhydrid und Trimellitanhydrid sowie polyfunktionelle Säureanhydride wie Pyromellit-Dianhydrid, Benzophenon-3,3',4,4'-tetracarbonsäure-Dianhydrid, 1,2,3,4-Butantetracarbonsäuredianhydrid oder radikalisch polymerisierte Homo- oder Copolymerisate von Maleinsäureanhydrid mit Ethylen, Isobutylene, Acrylnitril, Vinylacetat oder Styrol. Besonders bevorzugte Anhydride sind Succinanhydrid, Maleinsäureanhydrid, Itaconanhydrid, Glutaranhydrid, Adipinanhydrid, Citraconanhydrid, Phthalsäureanhydrid, Hexahydrophthalsäureanhydrid.

Auch bei der Verwendung von Lactonen und/oder cyclischen Säureanhydriden können diese jeweils allein oder in beliebigen Kombinationen eingesetzt werden.

Als Verzweiger wird in dem erfindungsgemäßen Verfahren vorzugsweise Glycerincarbonat, Glycidol und / oder Hydroxyoxetan eingesetzt. Unter einem Verzweiger wird im Rahmen der vorliegenden Erfindung ein Molekül verstanden, welches nach Einreaktion in das Polyethergerüst zwei reaktive Gruppen bereitstellt, an denen ein weiterer Kettenaufbau erfolgen kann. Das Glycidol und das Glycerincarbonat bringen in den Polyetherrest Rᵥ die in der Formel (I) definierten Monomereinheiten M5 bis M8 ein, das Glycerincarbonat außerdem ggf. die Monomereinheit M9. Die Hydroxyoxetane bringen die Monomereinheiten M12 und M13 ein.

Werden als Verzweiger Hydroxyoxetane eingesetzt, so handelt es sich hierbei vorzugsweise um ein 3-Alkyl-3-(hydroxyalkyl)oxetan, ein 3,3-Di(hydroxyalkyl)oxetan, ein 3-Alkyl-3-(hydroxyalkoxy)oxetan, ein 3-Alkyl-3-(hydroxyalkoxyalkyl)oxetan oder ein Dimer, Trimer oder Polymer eines 3-Alkyl-3-(hydroxyalkyl)oxetans, eines 3,3-Di(hydroxyalkyl)oxetans, eines 3-Alkyl-3-(hydroxyalkoxy)-oxetans oder eines 3-Alkyl-3-(hydroxyalkoxyalkyl)oxetans. "Alkyl" steht hier vorzugsweise für lineare oder verzweigte C₁-C₃₀-Alkyle oder Alkenyle. Besonders bevorzugt steht der Ausdruck "Alkyl" für Methyl und Ethyl. Der Ausdruck "Alkoxy" steht vorzugsweise für Methoxy, Ethoxy, Propoxy, Butoxy, Phenylethoxy und umfasst bis zu 20 Alkoxyeinheiten oder eine Kombination von zwei oder mehr Alkoxy-Einheiten.

Bevorzugt werden als Hydroxyoxetan 3-Methyl-3-(hydroxymethyl)oxetan, 3-Ethyl-3-(hydroxymethyl)oxetan, oder Trimethylolpropanoxetan (3,3-Di(hydroxymethyl)oxetan) verwendet. Es können auch Mischungen dieser Verbindungen eingesetzt werden. Besonders bevorzugt wird Trimethylolpropanoxetan eingesetzt.

Um die verzweigten Polyether herzustellen, werden mit Hilfe eines oder mehrerer Verzweiger, vorzugsweise Glycerincarbonat eine oder mehrere Verzweigungen in das Polyethergerüst eingebracht. Theoretisch genügt bereits 1 mol Verzweiger pro Mol QH-Gruppen, vorzugsweise Hydroxyl-Gruppen des Starters. Da jedoch die alkalisch katalysierte Reaktion von Glycerincarbonat nicht ausschließlich unter nucleophilem Angriff auf die CH₃-Gruppe des Carbonat-Ring erfolgt, sondern der nucleophile Angriff auch an den Kohlenstoff der Carbonatgruppe erfolgt, werden auch Carbonat-Ester gebildet. Um einen ausreichenden Grad an Verzweigung und ggf. Gehalt an Carbonatestergruppen zu gewährleisten, werden deshalb bevorzugt mindestens 2 mol Verzweiger in Bezug auf 1 mol der QH-Gruppen, vorzugsweise Hydroxylgruppen des verwendeten Starters (II) eingesetzt.

Um den Grad der Verzweigung beherrschbar zu halten, kann es vorteilhaft sein, den Gehalt an Verzweiger nach oben hin zu begrenzen. Als idealer Kennwert hat sich hier der prozentuale Molgehalt an Verzweiger, bezogen auf den Molgehalt der Summe aller Monomere aus denen das Polyethercarbonatgerüst unter Missachtung des Moles Startalkohol besteht, erwiesen. Dieser Molgehalt sollte vorzugsweise maximal 80 Mol-% besonders bevorzugt maximal 50 Mol-% und ganz besonders bevorzugt maximal 35 Mol-% betragen.

Zur Herstellung der verzweigten Polyether werden die QH-Gruppen, vorzugsweise Hydroxygruppen der bevorzugt allyl-funktionellen Starter vorzugsweise durch Alkalimetallhydroxide oder -alkoxide, vorzugsweise Natriummethylat, zumindest teilweise deprotoniert. Die eingesetzte Menge an Alkalimetallhydroxiden oder -alkoxiden beträgt vorzugsweise von 5 bis 25 mol-%, bevorzugt von 10 bis 15 mol-% bezogen auf die Anzahl der QH-Gruppen, vorzugsweise OH-Gruppen der eingesetzten Starter.

Die so erhaltene Mischung aus Alkoholen und Alkoholaten wird im ersten Prozessschritt mit einem oder mehreren zur ringöffnenden Polymerisation geeigneten Monomeren, vorzugsweise Alkylenoxiden vorzugsweise bei einer Temperatur zwischen 80°C und 200°C, bevorzugt zwischen 90°C und 170°C und besonders bevorzugt zwischen 100 und 125°C umgesetzt. Die Umsetzung erfolgt vorzugsweise bei Drücken im Bereich von 0,001 bis 100 bar, bevorzugt im Bereich zwischen 0,005 und 10 bar und ganz besonders bevorzugt zwischen 0,01 und 5 bar (jeweils absolute Drücke).

Nach der - vorzugsweise quantitativen - Umsetzung der Monomeren, vorzugsweise Alkylenoxide, kann sich gegebenenfalls ein Desodorierungsschritt anschließen, um Spuren von nicht umgesetzten Monomeren zu entfernen. Bei einem solchen Desodorierungsschritt wird der Reaktor bevorzugt bei der Temperatur die sich aus dem Polymerisationsschritt bzw. Alkoxylierungsschritt ergibt, bevorzugt bis zu einem Vakuum von kleiner-gleich 100 mbar, besonders bevorzugt bis zu einem Vakuum von kleiner-gleich 60 mbar und besonders bevorzugt bis zu einem Vakuum von kleiner-gleich 30 mbar evakuiert. In diesen evakuierten Reaktor wird nun im zweiten Prozessschritt der Verzweiger, vorzugsweise das Glycerincarbonat, bevorzugt bei einer Temperatur zwischen 120°C und 220°C, besonders bevorzugt zwischen 140°C und 200°C und ganz besonders bevorzugt bei einer Temperatur zwischen 160°C und 180°C dem Reaktionsgemisch zugeführt.

Die Umsetzung der Verzweiger Glycidol oder Hydroxyoxetan ist bereits aus dem Stand der Technik, wie z. B. WO 2010/003611 bekannt und kann wie dort beschrieben durchgeführt werden. Vorzugsweise wird die Umsetzung analog zu WO 2010/003611 durchgeführt.

Durch die Zugabegeschwindigkeit des Verzweigers, insbesondere des Glycerincarbonats und die gewählte Reaktionstemperatur lässt sich das Verhältnis von Glycerincarbonat-basierenden Verzweigungseinheiten M5-M8 zu Carbonatestersegmenten M9 regeln. Je schneller die Zugabegeschwindigkeit des Verzweigers und/oder je niedriger die Temperatur, umso höher ist der Gehalt an M9-Einheiten. Vorzugsweise erfolgt die Zugabe des Verzweigers mit einer Geschwindigkeit von 0,1 bis 10, bevorzugt 0,5 bis 5 und besonders bevorzugt 1 bis 2,5 mol/h bezogen auf die Anzahl (Mole) der (QH)-Gruppen der eingesetzten Starter.

Die Umsetzung des Glycerincarbonats kann sich teilweise durch die Freisetzung von CO₂ und demzufolge durch einen Druckaufbau im Reaktor bemerkbar machen. Diesem Druckaufbau kann durch kontinuierliches oder periodisches Entspannen entgegengewirkt werden. Die Zugabegeschwindigkeit des Glycerincarbonats wird vorzugsweise so gewählt, dass der Druck im Reaktor zu keiner Zeit einen Wert von 2 bar Überdruck (barü) überschreitet.

Der Reaktion im zweiten Prozessschritt schließt sich, vorzugsweise nach einer Nachreaktion (gleiche Bedingungen ohne weitere Zugabe von Verzweiger) für eine Dauer von 1 min bis 20 h, bevorzugt 0,1 h bis 10 h und besonders bevorzugt von 1 h bis 5 h ab der letzten Verzweigerzugabe, bevorzugt als dritter Prozessschritt eine weitere Umsetzung mit zur ringöffnenden Polymerisation geeigneten Monomeren, insbesondere Alkylenoxiden an. Die Bedingungen entsprechen hierbei denen der Polymerisation bzw. Alkylenoxid-Addition des ersten Prozessschritts.

Die (lebende) anionische ring-öffnende Polymerisation wird in allen drei Prozessschritten durch den schnellen Austausch der Protonen zwischen den Alkohol- und Alkoholat-Gruppen der wachsenden Ketten kontrolliert. Da mit jedem einreagierten Mol Verzweiger eine zusätzliche Hydroxylgruppe generiert wird, sinkt verfahrensbedingt die effektive Konzentration an Alkoholat-Ionen. Dies hat zur Folge, dass die Reaktionsgeschwindigkeit des dritten Prozessschritts langsamer sein kann als die des ersten Prozessschritts. Um diesem Effekt Rechnung zu tragen kann es von Vorteil sein, nach dem zweiten Reaktionsschritt eine erneute Katalysatordosage durchzuführen. Um eine schnellere Umsetzung des Glycerincarbonats zu erzielen, kann selbstverständlich auch nach dem ersten Reaktionsschritt eine erneute Katalysatordosage erfolgen, dies ist jedoch weniger bevorzugt.

Der aus der Reaktion des Katalysators mit dem zu deprotonierenden Molekül gebildete niedermolekulare Alkohol kann sowohl während des ersten Prozessschritts als auch während des dritten Prozessschritts im Vakuum abdestilliert werden. Es ist jedoch eindeutig bevorzugt, den durch die Katalyse bedingten Alkohol zu keiner Zeit abzudestillieren, da dieser Schritt einen zusätzlichen anlagentechnischen Aufwand und somit auch finanziellen Invest hervorrufen würde. Da zudem die Qualität des Endproduktes durch die Anwesenheit dieser Nebenkomponente(n) in keiner Weise negativ beeinträchtigt wird, wird bevorzugt auf diesen Prozessschritt verzichtet.

Nach Beendigung des dritten Prozessschritts kann sich ein Neutralisierungsschritt anschließen, bei dem das Alkali z. B. durch den Zusatz von entsprechenden Mengen anorganischer Säuren wie Phosphorsäure oder auch organischen Säuren wie Milchsäure neutralisiert wird. Eine Behandlung mit einem sauren Ionenaustauscher ist ebenfalls möglich jedoch weniger bevorzugt.

Die verzweigten Polyether bzw. Polyethercarbonate weisen mindestens eine verzweigende Generation, bevorzugt mindestens zwei verzweigende Generationen auf. Der Ausdruck "Generation" wird, wie in der WO 02/40572, im vorliegenden Fall auch zur Bezeichnung von pseudo-Generationen verwendet.

Die ¹³C-NMR-Verschiebungen der verzweigten Polyether wurden analog H. Frey et al., Macromolecules 1999, 32, 4240-4260 ausgewertet.

Die Carbonat-Segmente können analytisch mittels ¹³C-NMR- und IR-Spektroskopie nachgewiesen werden. Im ¹³C-NMR sind Signale im Bereich von 155-165 ppm für den Carbonylkohlenstoff des/der Carbonatestereinheit/en erkennbar. Im IR lassen sich die C=O-Absorptionen der Carbonatesterschwingung im Bereich von 1740-1750 und gegebenenfalls 1800-1810 Wellenzahlen erkennen.

Die Polydispersität (Mw/Mn) der verzweigten Polyethercarbonate der Formel (I), bestimmt mittels GPC, beträgt vorzugsweise < 3,5, bevorzugt <2,5 und besonders bevorzugt von >1,05 bis <1,8.

Eine besondere Ausführungsform der Synthese eines verzweigten Polyethers nach dem beschriebenen Verfahren, bei dem an den Starter Allylalkohol zunächst 4 Mole Ethylenoxid, dann 3 Mole Glycerincarbonat und abschließend je 4 Mole Ethylenoxid und Propylenoxid statistisch angelagert werden, kann z. B. zu einer in Formel (VI) dargestellten Molekülkonstitution des verzweigten Polyethercarbonats führen. An der Struktur der Formel (VI) ist zu erkennen, dass nur ein Drittel der durch das Glycerincarbonat zur Verfügung gestellten theoretisch möglichen Menge an Einheiten M9 eingebaut wurde. Die anderen zwei Drittel sind als CO₂ bei der Reaktion entwichen.

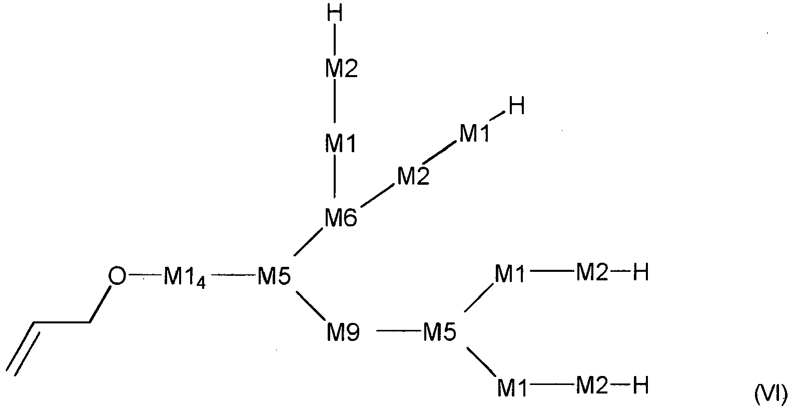

Die terminalen Hydroxygruppen der verzweigten Polyether können frei bleiben oder können teilweise oder komplett modifiziert werden, um die optimale Kompatibilität in der Anwendungsmatrix einstellen zu können. Als Modifikation sind Veresterungen oder Veretherungen ebenso denkbar wie weitere Kondensations- oder Additionsreaktionen mit z. B. Isocyanaten. Als Mono-Isocyanate können Verbindungen wie z. B. n-Butylisocyanat, Cyclohexylisocyanat, Toluylisocyanat, oder Monoaddukte von IPDI oder MDI eingesetzt werden, bevorzugt n-Butylisocyanat, Toluylisocyanat, insbesondere bevorzugt n-Butylisocyanat. Es können auch difunktionelle Isocyanate wie MDI, IPDI oder TDI eingesetzt werden, dies ist jedoch weniger bevorzugt. Die terminalen Hydroxygruppen bleiben bevorzugt frei, werden acetyliert, methyliert oder mit Carbonaten endverkappt.

Auch alle anderen bekannten Modifikationsmöglichkeiten von Hydroxygruppen können angewendet werden. Die erwähnten chemischen Umsetzungen müssen dabei nicht quantitativ erfolgen. So können die freien Hydroxygruppen auch nur teilweise, d.h. insbesondere mindestens eine Hydroxygruppe chemisch modifiziert sein. Die chemischen Modifizierungen derfreien Hydroxygruppen der verzweigten Polyethercarbonate können sowohl vor als auch nach der Hydrosilylierungsreaktion mit dem Si-H-funktionellen Polysiloxan chemisch modifiziert werden

### Schritt (b):

Vorzugsweise erfolgt die Bereitstellung der SiH-funktionellen Siloxane in Verfahrensschritt (b) durch die Durchführung des aus dem Stand der Technik bekannten Verfahrens der Äquilibrierung. Die Äquilibrierung der verzweigten oder linearen, ggf. hydrosilylierten, Poly(organo)siloxane mit end- und/oder seitenständigen SiH-Funktionen wird im Stand der Technik, z. B. in den Schriften EP 1 439 200 A1, DE 10 2007 055 485 A1 und DE 10 2008 041 601 beschrieben. Diese Schriften werden hiermit als Referenz eingeführt und gelten in Bezug auf den Verfahrensschritt (b) als Teil der Offenbarung der vorliegenden Erfindung.

### Schritt (c):

Der Schritt (c) wird vorzugsweise als Hydrosilylierung durchgeführt. Dabei werden die olefinisch ungesättigten Polyethercarbonate aus Schritt (a) mit den SiH-funktionellen Siloxanen aus Schritt (b) mittels Edelmetallkatalyse SiC-verknüpft.

Die Herstellung der eingesetzten Silikonpolyetherblock-Copolymeren kann nach einem aus dem Stand der Technik bekanntem Verfahren erfolgen, bei dem verzweigte oder lineare Polyorganosiloxane mit endständigen und/oder seitenständigen SiH-Funktionen mit einem ungesättigten Polyether oder einem Polyethergemisch aus mindestens zwei ungesättigten Polyethern umgesetzt werden. Die Umsetzung wird vorzugsweise als edelmetallkatalysierte Hydrosilylierung, wie z. B. in EP 1 520 870 beschrieben, durchgeführt. Die Schrift EP 1 520 870 wird hiermit als Referenz eingeführt und gilt als Teil des Offenbarungsgehaltes bezüglich des Verfahrensschrittes (c) der vorliegenden Erfindung. Als Edelmetallkatalysator wird vorzugsweise ein Platin aufweisender Katalysator eingesetzt.

Die Umsetzungen gemäß Verfahrensschritt (c) kann in Anwesenheit oder Abwesenheit von gesättigten Polyethern durchgeführt werden. Vorzugsweise wird der Verfahrensschritt (c) in Gegenwart von gesättigten Polyethern durchgeführt. Es ist möglich, den Verfahrensschritt c) in Gegenwart weiterer von gesättigten Polyethern verschiedenen Lösungsmitteln durchzuführen. Vorzugsweise werden keine von gesättigten Polyethern verschiedene Lösungsmittel eingesetzt. Der Verfahrensschritt c) kann auch in Gegenwart von Säure puffernden Agenzien durchgeführt werden. Vorzugsweise wird er aber in Abwesenheit von Säure puffernden Agenzien durchgeführt. Bevorzugt wird der Verfahrensschritt in Abwesenheit von Säure puffernden Agenzien und Lösungmitteln, die von gesättigten Polyethern verschieden sind, durchgeführt.

In Schritt (c) können neben den verzweigten Polyethern, insbesondere Polyethercarbonaten aus (a) weitere von diesen verschiedene lineare und/oder verzweigte, ungesättigte Polyetherverbindungen eingesetzt werden. Dies kann insbesondere vorteilhaft sein, um Verträglichkeiten der verzweigte Polyether haltigen Polysiloxane mit der Anwendungsmatrix anpassen zu können.

Durch unterschiedliche Anteile an M1 und M2 im unverzweigten Allylpolyether können die Eigenschaften des erfindungsgemäß eingesetzten Polysiloxans beeinflusst werden. So kann speziell wegen der größeren Hydrophobie der M2-Einheiten im Vergleich zu den M1-Einheiten durch die Wahl geeigneter M1:M2-Verhältnisse die Hydrophobie oder respektive die Hydrophilie des erfindungsgemäßen Polysiloxans gesteuert werden.

Es ist möglich, mehr als nur einen unverzweigten Allylpolyether einzusetzen. Zur besseren Steuerung der Verträglichkeit können auch Mischungen unterschiedlicher unverzweigter Allylpolyether eingesetzt werden.

Diese Polyether können nach beliebigen Verfahren, die dem Stand der Technik zu entnehmen sind, hergestellt werden. Die Alkoxylierung von ungesättigten Startverbindungen kann sowohl unter Basen-, Säuren- oder Doppelmetallcyanid-(DMC)-Katalyse hergestellt werden. Die Herstellung und Verwendung von DMC-Alkoxylierungskatalysatoren ist seit den 1960er Jahren bekannt und wird zum Beispiel in US 3,427,256, US 3,427,334, US 3,427,335, US 3,278,457, US 3,278,458 oder US 3,278,459 dargestellt. Noch wirksamere DMC-Katalysatoren, im speziellen Zink-Cobalt-Hexacyanokomplexe wurden in der Folgezeit entwickelt, z.B. in US 5,470,813 und US 5,482,908 beschrieben. Der Kettenterminus des unverzweigten Allylpolyethers kann hydroxyfunktionell sein, oder aber, wie zuvor beschrieben, beispielsweise durch Methylierung oder Acetylierung, modifiziert sein.

Es können ausschließlich ungesättigte Polyethercarbonate oder aber beliebige Mischungen dieser Polyethercarbonate mit ungesättigten verzweigten Polyethern, die keine Einheit M9 aufweisen, eingesetzt werden. Der molare Anteil der eingesetzten ungesättigten verzweigten Polyethercarbonate zu den carbonatfreien verzweigten Polyethern (Polyether ohne Einheit M9) beträgt vorzugsweise von 0,001 bis 100 mol-%, bevorzugt von 0,5 bis 70 mol-% und besonders bevorzugt 1 bis 50-mol-% bezogen auf die Summe aus ungesättigten verzweigten Polyethercarbonaten und carbonatfreien ungesättigten verzweigten Polyethern.

Die erfindungsgemäßen Zusammensetzungen zur Herstellung von Polyurethanschäumen, die zumindest eine Polyolkomponente, einen Katalysator, der die Ausbildung einer Urethan- oder Isocyanurat-Bindung katalysiert und optional ein Treibmittel aufweisen, zeichnen sich dadurch aus, dass sie außerdem eine Polysiloxanverbindung der Formel (IV) bzw. (X), wie oben definiert, enthält und gegebenenfalls weitere Additive und gegebenenfalls eine Isocyanat-Komponente aufweist.

Bevorzugte erfindungsgemäße Zusammensetzungen sind solche, die von 0,1 bis 10 Gew.-% an Polysiloxanverbindungen der Formel (IV) bzw. (X) enthalten. Die erfindungsgemäßen Zusammensetzungen weisen vorzugsweise von 0,05 bis 10 Massenteile, bevorzugt von 0,1 bis 7,5 und besonders bevorzugt von 0,25 bis 5 Massenteile Polysiloxanverbindungen der Formel (IV) bzw. (X) pro 100 Massenteile Polyolkomponenten auf.

Als Isocyanatkomponente kann die erfindungsgemäße Zusammensetzung alle zur Herstellung von Polyurethan-Schäumen, insbesondere Polyurethan- oder Polyisocyanurat-Hartschaumstoffen, geeigneten Isocyanatverbindungen aufweisen. Vorzugsweise weist die erfindungsgemäße Zusammensetzung ein oder mehrere organische Isocyanate mit zwei oder mehr Isocyanat-Funktionen auf. Geeignete Isocyanate im Sinne dieser Erfindung sind z. B. alle mehrfunktionalen organischen Isocyanate, wie beispielsweise 4,4'-Diphenylmethandiisocyanat (MDI), Toluoldiisocyanat (TDI), Hexamethylendiisocyanat (HMDI) und Isophorondiisocyanat (IPDI). Besonders geeignet ist das als "polymeres MDI" ("crude MDI") bekannte Gemisch aus MDI und höher kondensierten Analogen mit einer mittleren Funktionalität von 2 bis 4. Beispiele für geeignete Isocyanate sind in EP 1 712 578 A1, EP 1 161 474, WO 058383 A1, US 2007/0072951 A1, EP 1 678 232 A2 und der WO 2005/085310 genannt.

Die Polyolkomponente ist vorzugsweise verschieden von den Verbindungen der Formel (I) und den Siloxanverbindungen. Geeignete Polyole im Sinne dieser Erfindung sind alle organischen Substanzen mit mehreren gegenüber Isocyanaten reaktiven Gruppen sowie deren Zubereitungen. Bevorzugte Polyole sind alle zur Herstellung von Polyurethan-Schäumen üblicherweise verwendeten Polyetherpolyole und Polyesterpolyole. Polyetherpolyole werden durch Umsetzung von mehrwertigen Alkoholen oder Aminen mit Alkylenoxiden gewonnen. Polyesterpolyole basieren auf Estern mehrwertiger Carbonsäuren (meist Phthalsäure oder Terephthalsäure) mit mehrwertigen Alkoholen (meist Glycolen). Entsprechend den geforderten Eigenschaften der Schäume werden entsprechende Polyole verwendet, wie beispielsweise beschrieben in: US 2007/0072951 A1, WO 2007/111828 A2, US 2007/0238800, US 6359022 B1 oder WO 96 12759 A2. Ebenso werden bevorzugt verwendbare Pflanzenöl-basierende Polyole in verschiedenen Patentschriften beschrieben, wie beispielsweise in der WO 2006/094227, WO 2004/096882, US 2002/0103091, WO 2006/116456 und EP 1 678 232.

Falls in der erfindungsgemäßen Zusammensetzung ein oder mehrere Isocyanate vorliegen, liegt das Verhältnis von Isocyanat zu Polyol, ausgedrückt als Index, vorzugsweise im Bereich von 80 bis 500, bevorzugt 100 bis 350. Der Index beschreibt dabei das Verhältnis von tatsächlich eingesetztem Isocyanat zu (für eine stöchiometrische Umsetzung mit Polyol) berechnetem Isocyanat. Ein Index von 100 steht für ein molares Verhältnis der reaktiven Gruppen von 1 zu 1.

Als Katalysator, der die Ausbildung einer Urethan- oder Isocyanurat-Bindung katalysiert, weist die erfindungsgemäße Zusammensetzung vorzugsweise einen oder mehrere Katalysatoren für die Reaktionen Isocyanat-Polyol und/oder Isocyanat-Wasser und/oder Isocyanat-Trimerisierung geeigneten Katalysator auf. Geeignete Katalysatoren im Sinne dieser Erfindung sind vorzugsweise Katalysatoren, die die Gelreaktion (Isocyanat-Polyol), die Treibreaktion (Isocyanat-Wasser) und/oder die Di- bzw. Trimerisierung des Isocyanats katalysieren. Typische Beispiele für geeignete Katalysatoren sind die Amine Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol und Bis(dimethylaminoethyl)ether, Zinnverbindungen wie Dibutylzinndilaurat, Zinnsalze wie Zinn-2-Ethylhexanoat und Kaliumsalze wie Kaliumacetat und Kalium-2-ethylhexanoat. Geeignete Katalysatoren sind beispielsweise in EP 1985642, EP 1985644, EP 1977825, US 2008/0234402, EP 0656382 B1, US 2007/0282026 A1 und den darin zitierten Patentschriften genannt.

Bevorzugte in der erfindungsgemäßen Zusammensetzung vorhandene Mengen an Katalysatoren richten sich nach dem Typ des Katalysators und liegen üblicherweise im Bereich von 0,05 bis 5 pphp (= Massenteile bezogen auf 100 Massenteile Polyol) bzw. 0,1 bis 10 pphp für Kaliumsalze.

Als optionales Treibmittel kann die erfindungsgemäße Zusammensetzung Wasser oder ein anderes chemisches oder physikalisches Treibmittel aufweisen. Wird Wasser als Treibmittel eingesetzt, so hängen geeignete Wasser-Gehalte im Sinne dieser Erfindung davon ab, ob zusätzlich zum Wasser noch ein oder mehrere Treibmittel eingesetzt werden oder nicht. Bei rein Wasser getriebenen Schäumen liegen die Wassergehalte typischerweise bei 1 bis 20 pphp, werden zusätzlich andere Treibmittel eingesetzt, verringert sich die Einsatzmenge auf üblicherweise 0,1 bis 5 pphp. Es ist auch möglich eine vollkommen wasserfreie erfindungsgemäße Zusammensetzung einzusetzen.

Sind in der erfindungsgemäßen Zusammensetzung andere Treibmittel als Wasser vorhanden, können diese physikalische oder chemische Treibmittel sein. Vorzugsweise weist die Zusammensetzung physikalische Treibmittel auf. Geeignete physikalische Treibmittel im Sinne dieser Erfindung sind Gase, beispielsweise verflüssigtes CO₂, und leichtflüchtige Flüssigkeiten, beispielsweise Kohlenwasserstoffe mit 4 bis 5 KohlenstoffAtomen, bevorzugt cyclo-, iso- und n-Pentan, Fluorkohlenwasserstoffe, bevorzugt HFC 245fa, HFC 134a und HFC 365mfc, Fluorchlorkohlenwasserstoffe, bevorzugt HCFC 141 b, Hydrofluoroolefine, Sauerstoff-haltige Verbindungen wie Methylformiat und Dimethoxymethan, oder Chlorkohlenwasserstoffe, bevorzugt 1,2-Dichlorethan oder Methylenchlorid.

Neben oder an Stelle von Wasser und gegebenenfalls physikalischen Treibmitteln können auch chemische Treibmittel eingesetzt werden, die mit Isocyanaten unter Gasentwicklung reagieren, wie beispielsweise Ameisensäure.

Als Additive können die erfindungsgemäßen Zusammensetzungen weitere bei der Herstellung von Polyurethanschäumen einsetzbare Additive aufweisen. So sind beispielsweise Antioxidantien, Pigmente, Weichmacher oder Feststoffe wie Calciumcarbonat oder Flammschutzmittel einsetzbar. Häufig eingesetzte Additive sind insbesondere z. B. Flammschutzmittel.

Als Flammschutzmittel kann die erfindungsgemäße Zusammensetzung alle bekannten und zur Herstellung von Polyurethan-Schäumen geeigneten Flammschutzmittel aufweisen. Geeignete Flammschutzmittel im Sinne dieser Erfindung sind bevorzugt flüssige organische PhosphorVerbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe, wie Blähgraphit und Melamin, geeignet.

Als weitere Additive können in der Zusammensetzung optional auch nach dem Stand der Technik bekannte weitere Komponenten enthalten sein, wie z. B. Polyether, Nonylphenolethoxylate oder nichtionische Tenside.

Die erfindungsgemäßen Zusammensetzungen können zur Herstellung von PU-Schäumen eingesetzt werden. Die Verarbeitung der Zusammensetzungen zu Schaumstoffen kann nach allen dem Fachmann geläufigen Verfahren erfolgen, beispielsweise im Handmischverfahren oder bevorzugt mit Hilfe von Hochdruck-Verschäumungsmaschinen. Dabei können diskontinuierliche Verfahren, beispielsweise zur Produktion von Formschäumen, Kühlschränken und Paneelen, oder kontinuierliche Verfahren, beispielsweise bei Dämmplatten, Metallverbundelementen, Blöcken oder bei Sprühverfahren zum Einsatz kommen.

Vorzugsweise ist der erfindungsgemäße Polyurethanschaum ein durch das erfindungsgemäße Verfahren hergestellter Polyurethanschaum.

Die erfindungsgemäßen Polyurethanschäume können z. B. Polyurethanweichschäume, Polyurethanhartschäume, viskoelastische Schäume, HR-Schäume, halbharte Polyurethanschäume, thermoverformbare Polyurethanschäume oder Integralschäume sein. Bevorzugte erfindungsgemäße Polyurethanschäume sind Polyurethanweichschäume.

Bevorzugte erfindungsgemäße Polyurethanschäume zeichnen sich dadurch aus, dass der Massenanteil an Verbindungen der Formel (IV) und/oder, vorzugsweise und (X) von 0,001 bis 5 Massen-%, bezogen auf das Gewicht des gesamten Schaums, vorzugsweise von 0,01 bis 1,5 Massen-% beträgt.

Die erfindungsgemäßen Polyurethanschäume können z. B. als Kühlschrankisolierung, Dämmplatte, Sandwichelement, Rohrisolation, Sprühschaum, 1- & 1,5-Komponenten-Dosenschaum, Holzimitat, Modellschaum, Verpackungsschaum, Matratzen, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum, Dichtmittel und Kleber verwendet werden.

### Messmethoden:

Zur Bestimmung von Parametern oder Messwerten werden vorzugsweise die nachfolgend beschriebenen Methoden verwendet. Insbesondere wurden diese Methoden in den Beispielen des vorliegenden Schutzrechts verwendet.

Die Gehalte an Verzweigungen können beispielsweise durch NMR-Analyse oder MALDI-Tof-Analysen nachgewiesen werden.

Die NMR-Spektren wurden mit einem 400 MHz Spektrometer der Firma Bruker unter Einsatz eines 5 mm QMP-Kopfes gemessen. Es wurden quantitative NMR-Spektren in Gegenwart eines geeigneten Beschleunigungsagenzes gemessen. Die zu untersuchende Probe wurde in einem geeigneten deuterierten Lösungsmittel (Methanol, Chloroform) gelöst und in 5 mm oder ggf. 10 mm NMR-Röhrchen überführt.

MALDI-Tof-Analysen wurden mit einem Shimadzu Biotech Axima (CFR 2.8.420081127) Gerät im Mode "Reflectron" durchgeführt. Die "Pulse Extraction" war optimiert auf ein Molgewicht von 1 000 g/mol. Die Probe wurde in Chloroform (4-5 g/L) gelöst und 2 µL dieser Lösung auf Graphit als Matrix aufgetragen.

Die Carbonat-Segmente (M9) lassen sich durch ¹³C-NMR-Analysen oder vorzugsweise IRspektroskopisch nachweisen. Bei der IR-Spektroskopie können die M9-Einheiten durch Banden bei Wellenzahlen von ca. 1745 und ggf. ca. 1805 nachgewiesen werden.

Die IR-Analysen wurden mit dem IR-Spektrometer Tensor 27 der Firma Bruker Optics nach dem "Abandoned total reflection"-Verfahren auf einem Diamant gemessen. Die Auflösung betrug 4 cm⁻¹ und es wurden 32 sample scans durchgeführt.

Gewichtsmittlere und zahlenmittlere Molekulargewichte werden im Rahmen dieser Erfindung für die hergestellten Polyethercarbonate, kalibriert gegen einen Polypropylenglykolstandard, sowie die Endprodukte, kalibriert gegen einen Polystyrolstandard, durch Gelpermeationschromatographie (GPC) bestimmt. Die GPC wurde durchgeführt auf einem Agilent 1100 ausgestattet mit einem RI-Detektor und einer SDV 1000/10000 Å Säulenkombination bestehend aus einer 0,8 cm x 5 cm Vorsäule und zwei 0,8 cm x 30 cm Hauptsäulen bei einer Temperatur von 30°C und einer Fließrate von 1 mL/min (mobile Phase: THF). Die Probenkonzentration betrug 10 g/L und das Injektionsvolumen 20 µL.

Die nasschemische Analytik wurde in Anlehnung an internationale Standardmethoden durchgeführt: Iodzahl (IZ; DGF C-V 11 a (53); Säurezahl (SZ; DGF C-V 2); OH-Zahl (ASTM D 4274 C).

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

### Beispiel 1: Herstellung eines verzweigten, rein EO-haltigenPolyethercarbonats

In einem 5 Liter Autoklaven wurden 138 g Allylalkohol und 12,9 g Natriummethylat unter Stickstoff vorgelegt und bis auf einen Innendruck von 30 mbar evakuiert. Unter Rühren wurde das Reaktionsgemisch auf 115°C aufgeheizt und bei dieser Temperatur wurden 691 g Ethylenoxid angelagert. Nach quantitativem Umsatz des EO wurde der Reaktorinhalt durch Evakuierung auf 30 mbar desodoriert, um eventuell vorhandene Spuren von nicht umgesetztem EO zu entfemen. Anschließend wurde die Temperatur auf 170°C erhöht und über einen Zeitraum von 2 h werden 622 g Glycerincarbonat kontinuierlich zudosiert. Nach einer ca. zweistündigen Nachreaktion (gleiche Bedingungen ohne Zudosage von Glycerincarbonat) wurde das Reaktionsgemisch auf 115°C abgekühlt und es wurden weitere 1009 g EO angelagert. Nach einer einstündigen Nachreaktion wurde das Gemisch desodoriert und mit 25%iger Phosphorsäure neutralisiert. Das erhaltene verzweigte Polyethercarbonat wies eine OH-Zahl von 183,1 mg KOH/g und eine IZ von 24,2 mg I₂/100 g auf. Laut GPC betragen Mp = 444, Mw = 776, Mn = 507 und Mw/Mn = 1,5.

### Beispiel 2: Herstellung eines stärker verzweigten, rein EO-haltigen Polyethercarbonats

In einem 5 Liter Autoklaven wurden 119,6 g Allylalkohol und 11,1 g Natriummethylat unter Stickstoff vorgelegt und bis auf einen Innendruck von 30 mbar evakuiert. Unter Rühren wurde das Reaktionsgemisch auf 115°C aufgeheizt und bei dieser Temperatur wurden 599,5 g Ethylenoxid angelagert. Nach quantitativem Umsatz des EO wurde der Reaktorinhalt durch Evakuierung auf 30 mbar desodoriert, um eventuell vorhandene Spuren von nicht umgesetztem EO zu entfemen. Anschließend wurde die Temperatur auf 170°C erhöht und über einen Zeitraum von 2 h wurden 1071 g Glycerincarbonat kontinuierlich zudosiert. Nach einer ca. dreistündigen Nachreaktion (gleiche Bedingungen ohne Zudosage von Glycerincarbonat) wurde das Reaktionsgemisch auf 115°C abgekühlt und es wurden weitere 1434 g EO angelagert. Nach einer einstündigen Nachreaktion wurde das Gemisch desodoriert und mit 25%iger Phosphorsäure neutralisiert. Das erhaltene verzweigte Polyethercarbonat wies eine OH-Zahl von 205,3 mg KOH/g und eine IZ von 16,8 mg I₂/100 g auf. Laut GPC betrugen Mp = 456, Mw = 885, Mn = 545 und Mw/Mn = 1,62.

### Beispiel 3: Herstellung eines verzweigten, EO- und PO-haltigen Polyethercarbonats

In einem 5 Liter Autoklaven wurden 116,9 g Allylalkohol und 10,9 g Natriummethylat unter Stickstoff vorgelegt und bis auf einen Innendruck von 30 mbar evakuiert. Unter Rühren wurde das Reaktionsgemisch auf 115°C aufgeheizt und bei dieser Temperatur wurden 585,9 g Ethylenoxid angelagert. Nach quantitativem Umsatz des EO wurde der Reaktorinhalt durch Evakuierung auf 30 mbar desodoriert, um eventuell vorhandene Spuren von nicht umgesetztem EO zu entfemen. Anschließend wurde die Temperatur auf 170°C erhöht und über einen Zeitraum von 2 h wurden 526,8 g Glycerincarbonat kontinuierlich zudosiert. Nach einer ca. zweieinhalbstündigen Nachreaktion (gleiche Bedingungen ohne Zudosage von Glycerincarbonat) wurde das Reaktionsgemisch auf 115°C abgekühlt und es wurden 1157,3 g PO angelagert. Nach einer einstündigen Nachreaktion wurde das Gemisch desodoriert und mit 25%iger Phosphorsäure neutralisiert. Das erhaltene verzweigte Polyethercarbonat wies eine OH-Zahl von 175,7 mg KOH/g und eine IZ von 21,5 mg I₂/100 g auf. Laut GPC betrugen Mp = 517 Mw = 875, Mn = 579 und Mw/Mn = 1,5.

### Beispiel 4: Herstellung eines verzweigten, rein EO-haltigen Polyethers mittels Glycidol

In einem 5 Liter Autoklaven wurden 138 g Allylalkohol und 12,9 g Natriummethylat unter Stickstoff vorgelegt und bis auf einen Innendruck von 30 mbar evakuiert. Unter Rühren wurde das Reaktionsgemisch auf 115°C aufgeheizt und bei dieser Temperatur wurden 691 g Ethylenoxid angelagert. Nach quantitativem Umsatz des EO wurde der Reaktorinhalt durch Evakuierung auf 30 mbar desodoriert, um eventuell vorhandene Spuren von nicht umgesetztem EO zu entfemen. Anschließend wird über einen Zeitraum von 2 h 390 g Glycidol kontinuierlich zudosiert. Nach einer ca. zweistündigen Nachreaktion (gleiche Bedingungen ohne Zudosage von Glycidol) wurden weitere 1009 g EO angelagert. Nach einer einstündigen Nachreaktion wurde das Gemisch desodoriert und mit 25%iger Phosphorsäure neutralisiert. Der erhaltene verzweigte Polyether wies eine OH-Zahl von 196,5 mg KOH/g und eine IZ von 20,2 mg I₂/100 g auf.

### Beispiel 5: Herstellung eines verzweigten, rein EO-haltigen Polyethers mittels einem Hydroxyoxetan

Ein verzweigter Polyether wurde analog, wie in Beispiel Allylpolyether 6 der Patentschrift WO 2010/003611 beschrieben, synthetisiert.

### Beispiel 6a: Methylierung eines Polyethercarbonats

Unter Schutzgas wurden in einem 2 Liter Dreihals-Kolben ausgestattet mit Destillationsbrücke 783 g des verzweigten Polyethercarbonats aus Beispiel 1 vorgelegt und auf 50°C erwärmt. Bei dieser Temperatur wurde langsam Natriummethylat im molaren Überschuss zugegeben. Das entstehende Methanol wurde abdestilliert. Anschließend wurde Wasserstrahlvakuum angelegt, die Temperatur auf 115°C erhöht und 1,5 h Methylchlorid mit Hilfe eines Gaseinleitungsrohres in die Lösung eingeleitet. Nach einem erneuten Vakuumdestillationsschritt wurde erneut Methylchlorid über einen Zeitraum von 1 h eingeleitet. Dann wurde destilliert (115°C im Vakuum), neutralisiert (mit Phosphorsäure) sowie filtriert (Papierfilter) und man erhielt ein terminal methyliertes Produkt mit einer IZ von 22,6 mg I₂/100 g auf.

In analoger weise wurde der aus Beispiel 2 erhaltene Polyether methyliert.

### Beispiel 6b: Acetylierung eines Polyethercarbonats

Unter Schutzgas wurden in einem 2 Liter Dreihals-Kolben ausgestattet mit Tropftrichter und Rückflusskühler 563 g des verzweigten Polyethercarbonats aus Beispiel 1 zusammen mit katalytischen Mengen an konz. Salzsäure vorgelegt und auf 85 °C erwärmt. Dann wurde langsam Essigsäureanhydrid zugegeben. Nach kompletter Addition wurde das Gemisch noch 4 h gerührt. Dann wurden gegebenenfalls vorhandene Säurereste abdestilliert und man erhielt ein terminal acetyliertes, verzweigtes Polyethercarbonat mit einer Jodzahl IZ von 22,7 mg I₂/100 g.

In analoger weise wurden die aus Beispiel 2 und 3 erhaltenen Polyether acetyliert.

**Tabelle 1: Theoretische Zusammensetzung der nachfolgend zur Herstellung von Stabilisatoren verwendeten verzweigten Polyether.**

| Nr.* | Startalkohol Z(Q-H)ⱼ | M | M | M | J |
|---|---|---|---|---|---|
| 1 | Q = O, Z = CH₂=CHCH₂-, j = 1 | M1 i1 = 6,5 | M5-M6 + M9 | M1 i1 = 9,6 | H |
| | | | i5-i6 + i9 = 2 | | |
| 1a | Q = O, Z = CH₂=CHCH₂-, j = 1 | M1 i1 = 6,5 | M5-M6 + M9 | M1 i1 = 9,6 | CH3 |
| | | | i5-i6 + i9 = 2 | | |
| 2 | Q = O, Z = CH₂=CHCH₂-, j = 1 | M1 i1 = 6,5 | M5-M6 + M9 | M1 i1 = 15,5 | H |
| | | | i5-i6 + i9 = 4 | | |
| 2a | Q = O, Z = CH₂=CHCH₂-, j = 1 | M1 i1 = 6,5 | M5-M6 + M9 | M1 i1 = 15,5 | CH3 |
| | | | i5-i6 + i9 = 4 | | |
| 2b | Q = O, Z = CH₂=CHCH₂-, j = 1 | M1 i1 = 6,5 | M5-M6 + M9 | M1 i1 =15,5 | C(O)CH3 |
| | | | i5-i6 + i9 = 4 | | |
| 3b | Q = O, Z = CH₂=CHCH₂-, j = 1 | M1 i1 = 6,5 | M5-M6 + M9 | M2 i2 = 9,6 | C(O)CH3 |
| | | | i5-i6 + i9 = 2 | | |
| 4 | Q = O, Z = CH₂=CHCH₂-, j = 1 | M1 i1 = 6 | M5-M6 | M1 i1 = 9 | - |
| | | | i5-i6 = 2 | | |
| 5 | Q = O, Z = CH₂=CH-CH₂-O-CH₂- | M1 i1 = 18 | M12 i12 = 4 | - | H |
| | C(CH₂CH₃)(CH₂XH)₂ | | M13 i13 = 8 | | |

| | | | | | |
|---|---|---|---|---|---|
| *a* = *Endverkappung methyliert, b* = *Endverkappung acetyliert* | | | | | |

Neben den erfindungsgemäßen verzweigten Polyethern wurden auch bereits bekannte unverzweigte Polyether bei der Herstellung der Polyethersiloxane verwendet:
PE V1: Allylalkohol gestartet, mittleres Molgewicht = 600 g/mol, rein Ethylenoxid basierend
PE V2: Allylalkohol gestartet, mittleres Molgewicht = 1200 g/mol, Ethylenoxid, Propylenoxid basierend mit einem Gewichtsanteil von 20% Propylenoxid.

### Beispiel 7: Herstellung von Wasserstoffsiloxanen gemäß EP 1439200 A1

Entsprechend der angestrebten Stöchiometrie wurden die in Beispiel 1 der EP 1439200 A1 als Rohstoffe verwendeten SiH-funktionellen und nichtfunktionellen Siloxane gemischt und umgesetzt. Auf diese Weise werden flüssige, klare Wasserstoffsiloxane erhalten, deren Strukturen gemäß Formel (IV) bzw. (X) in Tabelle 2 aufgeführt sind.

**Tabelle 2**

| | R | R₁ₐ | R_{1b} | R_{P} | R₂ | R₃ | a | b₁ | b₂ | c | d |
|---|---|---|---|---|---|---|---|---|---|---|---|
| Bsp. 7a | CH₃ | CH₃ | CH₃ | H | - | - | 51 | 7 | 0 | 0 | 0 |
| Bsp. 7b | CH₃ | H | H | H | - | - | 40 | 4 | 0 | 0 | 0 |
| Bsp. 7c | CH₃ | CH₃ | CH₃ | H | - | - | 50 | 8 | 0 | 0 | 0 |
| Bsp. 7d | CH₃ | CH₃ | CH₃ | H | - | - | 25 | 2 | 0 | 0 | 0 |

### Beispiel 8: Herstellung eines polyethercarbonatmodifizierten Siloxans

In einem 500-ml-Vierhalskolben mit angeschlossenem KPG-Rührer, Rückflusskühler und Innenthermometer wurden 61,7 g der Wasserstoffsiloxane aus Beispiel 7a und 136,2 g des Polyethercarbonats aus Beispiel 1 unter Rühren auf 70°C erhitzt. Ein gemäß EP 1520870 A1 aktivierter Karstedt-Katalysator wurde als Katalysator hinzugegeben. Der gasvolumetrisch bestimmte Umsatz war nach 3 Stunden quantitativ. Man erhielt ein gelbes, trübes Produkt, das mit Wasser eine klare Lösung bildet.

Die weiteren eingesetzten Silikonstabilisatoren der Formel (IV) bzw. (X) wurden analog zu Beispiel 8 nach der in EP 1520870 beschriebenen Methode synthetisiert. Die eingesetzten Mengen wurden so ausgewählt, dass die molaren Verhältnisse denen von Beispiel 8 entsprachen. Die Zuordnung der resultierenden Schaumstabilisatoren ist in Tabelle 3 aufgeführt.

**Tabelle 3: Struktur und Zuordnung der eingesetzten Stabilisatoren in der Verschäumung**

| Polyether Bsp.-Nr. | Siloxan Bsp.-Nr. | Polyether-Siloxan Bsp. Nr. |
|---|---|---|
| 1a | 7a | 8a |
| 2a | 7a | 8b |
| 2b | 7a | 8c |
| 3b | 7a | 8d |
| 1 | 7b | 8e |
| 1 | 7c | 8f |
| 1 | 7d | 8g |
| 1a | 7b | 8h |
| 2 | 7b | 8i |
| 2 | 7c | 8j |
| 4 | 7c | 8k |
| 5 | 7c | 8l |
| PE V1 (50/50) | 7c | 8m |
| PE V2 (30/70) | 7c | 8n |

bei den Polyethersiloxanen 8m und 8n wurden die beiden Polyether in dem angegebenen Äquivalent-Verhältnis, bezogen auf die Allyl-Funktionalität eingesetzt.

### Beispiele 9 bis 12: Herstellung von Polyurethanweichschäumen

Zur Herstellung der Polyurethanschäume wurde folgende Rezeptur verwendet: 100 Gew.-Teile Polyetherol (Hydroxylzahl = 48 mg KOH/g, 11-12 % EO), 5 Gew.-Teile Wasser, 5 Gew.-Teile Methylenchlorid, 0,6 Gew.-Teil der Silikonstabilisatoren (PES) gemäß Tabelle 3 bzw. 4, die mit Hilfe der in Tabelle 2 angeführten Polyether-Polysiloxan-Beispiele verzweigter Natur hergestellt wurden, 0,15 Gew.-Teile eines tertiären Amins, 64,2 Gew.-Teile Toluoldiisocyanat T 80 (Index 115), sowie 0,23 Gew.-Teile KOSMOS® 29 (Evonik Goldschmidt GmbH). Bei der Verschäumung wurden 400 g Polyol eingesetzt, die anderen Formulierungsbestandteile wurden entsprechend umgerechnet.

Zur Verschäumung wurden das Polyol, Wasser, Amin, Zinnkatalysator und Silikonstabilisator unter Rühren gut vermischt. Nach Zugabe von Methylenchlorid und Isocyanat wurde mit einem Rührer 7 Sek. bei 3000 U / min gerührt. Das erhaltene Gemisch wurde in einen mit Papier ausgekleideten Holzkasten (Grundfläche 27 c m x 2 7 cm) gegossen. Es entstand ein Schaumstoff, der den nachfolgend beschriebenen anwendungstechnischen Tests unterzogen wurde.

### Physikalische Eigenschaften der Schäume

Die hergestellten Schäume wurden anhand folgender physikalischer Eigenschaften beurteilt:
a) Rücksacken des Schaumstoffes nach dem Ende der Steigphase (= Rückfall):
   Der Rückfall, bzw. das Nachsteigen ergibt sich aus der Differenz der Schaumhöhe nach direktem Abblasen und nach 3 min. nach Abblasen des Schaums. Die Schaumhöhe wird dabei durch eine an einem Zentimetermaß befestigte Nadel auf dem Maximum in der Mitte der Schaumkuppe gemessen.
b) Schaumhöhe (= Höhe):
   Die Endhöhe des Schaums wird dadurch bestimmt, dass der Rückfall bzw. das Nachsteigen von bzw. zu der Schaumhöhe nach dem Abblasen subtrahiert bzw. addiert wird.
c) Raumgewicht (RG):
   Die Bestimmung erfolgt wie in ASTM D 3574 - 08 unter Test A beschrieben durch Messung der Core Density.
d) Luftdurchlässigkeit / Porosität
e) Stauchhärte (Compression Load Deflection CLD), 40 %
f) Druckverformungsrest bei Kompression um 70 % für 22 h bei 70 °C
g) Rückprallelastizität (Ball rebound test) (= Rückprall)

Die Tests e) bis g) wurden ebenfalls gemäß ASTM D 3574-08 durchgeführt.

Der Test d) wurde wie folgt durchgeführt:

### Methode:

Die Luftdurchlässigkeit bzw. Porosität des Schaums wurde durch eine Staudruckmessung am Schaumstoff ermittelt. Der gemessene Staudruck wurde in mm Alkoholsäule angegeben, wobei die niedrigeren Staudruckwerte den offeneren Schaum charakterisieren. Die Werte wurden im Bereich von 0 bis 300 mm gemessen.

### Apparatur:

Die Messapparatur wurde durch die hausinteme Stickstoffleitung gespeist, ist daher an diese angeschlossen und besteht aus folgenden miteinander verbundenen Teilen:
Reduzierventil mit Manometer,
Durchflussregelschraube,
Waschflasche,
Durchflussmessgerät,
T-Stück,
Auflagedüse,
Skaliertes Glasrohr, mit Alkohol gefüllt

Die Waschflasche ist nur obligatorisch, wenn die Apparatur nicht aus der internen Leitung, sondern direkt mit technischem Flaschengas gespeist wird.

Das Durchflussmessgerät ist vor der ersten Inbetriebnahme gemäß den Herstellerangaben unter Verwendung der mitgelieferten Eichkurven zu kalibrieren und bei 8 Umin = 480 L/h mit einer Markierung zu versehen.

Die Auflagedüse ist spezifiziert durch eine Kantenlänge von 100 x 100 mm, ein Gewicht zwischen 800 und 1000 g, lichte Weite der Ausströmöffnung von 5 mm, lichte Weite des unteren Auflageringes von 30 mm.

Die Messflüssigkeit (techn. Alkohol (Ethanol)) kann zur Anhebung des optischen Kontrastes angefärbt werden.

### Messvorgang:

Der Stickstoffvordruck wurde per Reduzierventil auf 1 bar eingestellt. Die Durchflussmenge wurde per Durchflussregelschraube auf die entsprechend 480 Uh eingeregelt. Die Flüssigkeitsmenge im skalierten Glasrohr wurde durch Alkohol auf ein Niveau gebracht, sodass keine Druckdifferenz aufgebaut und ablesbar ist. Für die eigentliche Vermessung des Prüfkörpers wurden fünf Einzelmessungen, vier an den vier Ecken und eine in der Mitte des Prüfkörpers durchgeführt. Hierzu wird an den Ecken die Auflagedüse kantenkongruent aufgelegt, die Mitte des Prüfkörpers wird geschätzt. Abgelesen wird, wenn sich ein konstanter Staudruck eingestellt hat.

### Auswertung:

Die obere Messgrenze der Methode liegt bei 300 mm Flüssigkeitssäule (FS). Für die Protokollierung sind drei verschiedene Fälle zu unterscheiden:
1. Alle fünf Werte liegen unter 300 mm FS. In diesem Fall wird das arithmetische Mittel gebildet und protokolliert.
2. Alle fünf Werte sind größer oder gleich 300 mm FS. In diesem Fall ist der Wert > 300 bzw. 300 zu protokollieren.
3. Von den fünf Messwerten sind a) Werte explizit bestimmbar, b) Werte größer oder gleich 300: es wird das arithmetische Mittel aus fünf Werten gebildet, wobei für die b)-Messwerte jeweils 300 eingesetzt wird. Die Anzahl der Werte größer oder gleich 300 wird mit Schrägstrich von dem Mittelwert getrennt ebenfalls protokolliert.

### Beispiel:

Vier Messwerte entsprechend 180, 210, 118 und 200 mm FS; ein Messwert > 300 mm FS ergibt (180 + 210 + 118 + 200 + 300) / 5. Protokolleintrag: 202/1.

Die Ergebnisse sind in Tabelle 4 zusammengefasst.

**Tabelle 4: Physikalische Eigenschaften von Weichschäumen der Beispiele 9 bis 12, die mit Hilfe von Stabilisatoren hergestellt wurden, die Polyether verzweigter Natur enthalten**

| Bsp. Nr. | PES Nr. | Steigzeit [s] | Rückfall [cm] | Höhe [cm] | RG [kg/m³] | Porosität [mm] | CLD 40 % [kPa] | Druckverformung | Rückprall [%] |
|---|---|---|---|---|---|---|---|---|---|
| 9 | 8a | 83 | 2,2 | 32,2 | 18,4 | 7 | 3,8 | 5,3 | 42 |
| 10 | 8b | 82 | 3,5 | 30,5 | 19,4 | 6 | 3,8 | 6,2 | 42 |
| 11 | 8c | 89 | 2,2 | 30,2 | 18,6 | 8 | 3,6 | 5,1 | 43 |
| 12 | 8d | 85 | 0,8 | 32,3 | 17,6 | 19 | 3,7 | 5,3 | 37 |

Aus Tabelle 4 wird ersichtlich, dass stabile Weichschäume mit sehr guten physikalischen Eigenschaften ohne Probleme unter Verwendung von erfindungsgemäßen Silikonpolyether-Stabilisatoren hergestellt werden können. Dabei beinhaltet die Struktur dieser Stabilisatoren mindestens eine Verzweigung im Polyether.

### Beispiele 13 bis 15: Herstellung von Polyurethanhartschäumen

Die Durchführung der Verschäumungen erfolgte im Handmischverfahren. Dazu wurden Polyol, Flammschutzmittel, Katalysatoren, Wasser, konventioneller bzw. erfindungsgemäßer Schaumstabilisator und Treibmittel in einen Becher eingewogen und mit einem Tellerrührer (6 cm Durchmesser) 30 s bei 1000 Upm vermischt. Durch erneutes Abwiegen wurde die beim Mischvorgang verdunstete Treibmittelmenge bestimmt und wieder ergänzt. Anschließend wurde das Isocyanat (MDI) zugegeben, die Reaktionsmischung mit dem beschriebenen Rührer 5 s bei 3000 Upm verrührt und im Falle der frei gestiegenen Schäume in eine mit Papier ausgekleidete Kiste mit einer Grundfläche von 27 cm x 14 cm gegossen. Bei der Kühlschrank-Formulierung wurde die Mischung in eine thermostatisierte Aluminiumform überführt, welche mit Polyethylenfolie ausgekleidet war. Die Einsatzmenge an Schaumformulierung war dabei so bemessen, dass sie um 15 Massen-% über der zur Mindestbefüllung der Form notwendigen Menge lag.

Einen Tag nach der Verschäumung wurden die Schaumstoffe analysiert. Bei frei gestiegenen Schäumen wurde die Bodenzone des Schaums, sowie anhand einer Schnittfläche im oberen Teil des Schaums der Grad der Innenstörungen und die Porenstruktur visuell beurteilt anhand einer Skala von 1 bis 10, wobei 10 einen ungestörten Schaum und 1 einen extrem stark gestörten Schaum repräsentiert. Anschließend wurden Probekörper daraus geschnitten für einen Brandtest zur Klassifizierung nach nach DIN 4102, dem sogenannten "B2-Test". Hierbei wird die maximale Flammhöhe beim Abbrennen eines Probekörpers bestimmt, wobei ein Wert von unter 150 mm erreicht werden muss um den Test zu bestehen.

Bei den Formschäumen wurden Oberfläche und Innenstörungen ebenfalls subjektiv anhand einer Skala von 1 bis 10 beurteilt. Die Porenstruktur (mittlere Zahl der Zellen pro 1 cm) wurde auf einer Schnittfläche optisch durch Vergleich mit Vergleichsschäumen beurteilt. Die Wärmeleitzahl (λ-Wert) wurde an 2,5 cm dicken Scheiben mit einem Gerät vom Typ Hesto Lambda Control bei Temperaturen an Probenunter- und -oberseite von 10°C und 36°C gemessen.

### Beispiele 13 bis 15: Hartschaum, freigestiegen

Es wurde das in Tabelle 5 genannte PUR-Hartschaumsystem für die freigestiegenen Schäume verwendet.

**Tabelle 5: Formulierung frei gestiegene Hartschäume**

| **Komponente** | **Gewichtsanteil** |
|---|---|
| Daltolac R 471* | 60 Teile |
| Terate 203** | 40 Teile |
| | |
| Tris(1-chlor-2-propyl)phosphat | 40 Teile |
| N,N,N',N",N"-Pentamethyldiethylentriamin | 0,2 Teile |
| N,N-Dimethylcyclohexylamin | 2,0 Teile |
| | |
| Wasser | 1,0 Teile |
| Schaumstabilisator | 1,0 Teile |
| Solkane 141b | 25 Teile |
| Desmodur 44V20L**** | 140 Teile |

| | |
|---|---|
| * Polyetherpolyol der Firma Huntsman ** Polyesterpolyol der Firma Invista *** Polyesterpolyol der Firma Stepan **** polymeres MDI der Firma Bayer | |

Die Ergebnisse der frei gestiegenen Schäume sind in Tabelle 6 angegeben.

**Tabelle 6: Ergebnisse zu frei gestiegenen Schäumen**

| Bsp. | Stabilisator aus Bsp. | Defekte innen (1-10) | Porenstruktur (1-10) | Bodenzone (1-10) | B2-Test |
|---|---|---|---|---|---|
| 13 | 8e | 9 | 8 | 9 | 140 mm |
| 14 | 8i | 10 | 8 | 9 | 140 mm |
| 15 | 8m | 9 | 9 | 9 | 140 mm |

Die Beispiele 12 bis 14 zeigen, dass mit den erfindungsgemäßen Polyethersiloxanen PU-Schäume hergestellt werden können, die gute flammhemmende Eigenschaften haben.

### Beispiele 16 bis 25: PUR-Hartschaumsystem für Isolation von Kühlmöbeln

Es wurde eine für dieses Einsatzgebiet abgestimmte Formulierung verwendet (siehe Tabelle 7), die jeweils mit erfindungsgemäßen Schaumstabilisatoren verschäumt wurde. Dabei wurde die Reaktionsmischung in eine auf 45 °C thermostatisierte Aluminiumform von 145 cm x 14,5 cm x 3,5 cm Größe eingetragen.

**Tabelle 7: Formulierung Kühlschrank-Isolation**

| Komponente | Gewichtsteile |
|---|---|
| Daltolac R 471 * | 100 Teile |
| N,N-Dimethylcyclohexylamin | 1,5 Teile |
| Wasser | 2,6 Teile |
| cyclo-Pentan | 13,1 Teile |
| Stabilisator | 1,5 Teile |
| | |
| Desmodur 44V20L** | 198,5 Teile |

| | |
|---|---|
| * Polyetherpolyol der Firma Huntsman ** polymeres MDI der Firma Bayer | |

Die in Tabelle 8 dargestellten Ergebnisse lassen erkennen, dass die erfindungsgemäßen Stabilisatoren geeignet sind um Polyurethanschäume mit niedrigeren Wärmeleitfähigkeiten und guten Oberflächenqualitäten herzustellen.

**Tabelle 8: Ergebnisse zu Kühlschrank-Isolation**

| Bsp. | Stabilisator aus Bsp. | Defekte (1-10) oben/unten /innen | Zellen / cm⁻¹ | λ-Wert / mW/m*K |
|---|---|---|---|---|
| 16 | 8e | 7/4/6 | 35-39 | 22,6 |
| 17 | 8f | 6/3/6 | 35-39 | 22,7 |
| 18 | 8g | 7/4/6 | 35-39 | 22,5 |
| 19 | 8h | 8/5/7 | 35-39 | 22,7 |
| 20 | 8i | 7/5/6 | 40-44 | 22,4 |
| 21 | 8j | 6/4/6 | 40-44 | 22,6 |
| 22 | 8k | 6/4/6 | 40-44 | 22,4 |
| 23 | 8l | 7/4/6 | 40-44 | 22,3 |
| 24 | 8m | 7/5/6 | 40-44 | 22,3 |
| 25 | 8n | 7/5/6 | 40-44 | 22,6 |

Wie die Versuche zeigen stellen die erfindungsgemäßen Stabilisatoren eine geeignet Alternative zu der Verwendung von nicht verzweigten Polyethersiloxanen bei der Herstellung von Hartschaum dar.

## Patentansprüche

1. Verfahren zur Herstellung von Polyurethanschäumen, **dadurch gekennzeichnet, dass** eine Polysiloxanverbindungen der Formel (IV) 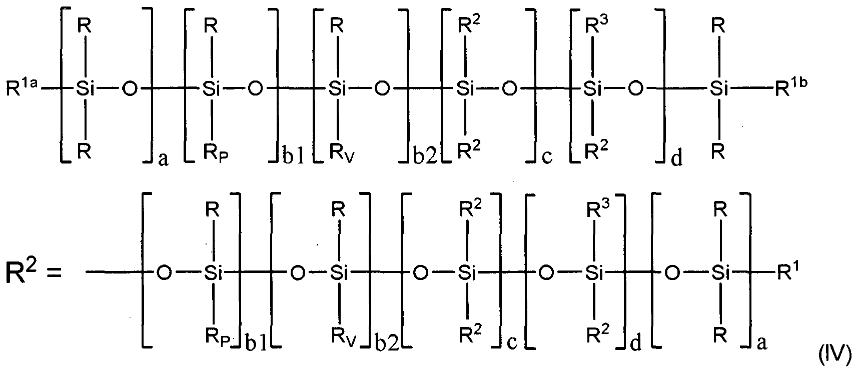 worin
a unabhängig voneinander 0 bis 2000,
b1 unabhängig voneinander 0 bis 60,
b2 unabhängig voneinander 0 bis 60,
c unabhängig voneinander 0 bis 10,
d unabhängig voneinander 0 bis 10,
R mindestens ein Rest aus der Gruppe linearer, cyclischer oder verzweigter, gesättigter oder ungesättigter Kohlenwasserstoffreste mit 1 bis zu 20 C-Atomen oder aromatischer Kohlenwasserstoffrest mit 6 bis zu 20 C-Atomen, ist,
R¹ unabhängig voneinander R oder -OR⁴ ist,
R^{1a} unabhängig voneinander R, R_{V}, R_{P} oder -OR⁴ ist,
R^{1b} unabhängig voneinander R, R_{V}, R_{P} oder -OR⁴ ist,
R³ unabhängig voneinander R oder ein ggf. mit Heteroatomen substituierter, gesättigter oder ungesättigter, organischer Rest, vorzugsweise ausgewählt aus der Gruppe der Alkyl-, Aryl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Reste ist,
R⁴ unabhängig voneinander Alkylrest mit 1 bis 10 Kohlenstoffatomen, vorzugsweise Methyl-, Ethyl oder Isopropylrest,
R_{P} unabhängig voneinander -OR⁴, Wasserstoff oder über Si-C-Bindungen gebundene unverzweigte Polyetherreste aus Alkylenoxid-Einheiten mit 1-30 Kohlenstoffatomen, aus Arylenoxid-Einheiten und/oder aus Glycidylether-Einheiten mit einem gewichtsmittleren Molekulargewicht zwischen 200 und 30000 g/mol und/oder über Si-C-Bindungen gebundener aliphatischer und/oder cycloaliphatischer und/oder aromatischer Polyester- oder Polyetheresterrest mit einem gewichtsmittleren Molekulargewicht zwischen 200 und 30000 g/mol,
R_{V} ein über eine Si-C-Bindung angebundener Rest der Formel (la)
-Z'(-Q-M1ᵢ₁-M2ᵢ₂-M3ᵢ₃-M4ᵢ₄-M5ᵢ₅-M6ᵢ₆-M7ᵢ₇-M8ᵢ₈-M9ᵢ₉-M10ᵢ₁₀-M11ᵢ₁₁-M12ᵢ₁₂-M13ᵢ₁₃-Jᵢ₁₄)ᵢ(X-J)ₖ (la)
wobei
i = 1 bis 10, vorzugsweise 1 bis 5, bevorzugt 2 bis 3
k = 0 bis 9, vorzugsweise 0 bis 5, bevorzugt 1 bis 3
i + k = 1 bis 10, bevorzugt 1 bis 5, besonders bevorzugt von 2 bis 3 i1 bis i14 = jeweils unabhängig voneinander 0 bis 500, vorzugsweise 0,1 bis 100 und insbesondere bevorzugt 1 bis 30
Q = gleich oder verschieden O, NH, N-Alkyl, N-Aryl oder S,
Z' = beliebiger organischer Rest, wobei jedes Q mit einem Kohlenstoffatom des organischen Restes verknüpft ist,
J unabhängig voneinander Wasserstoff, ein linearer, cyclischer oder verzweigter, aliphatischer oder aromatischer, gesättigter oder ungesättigter Kohlenwasserstoffrest mit 1 bis zu 30 C-Atomen, ein Carbonsäurerest mit 1 bis 30 Kohlenstoffatomen oder ein mit Heteroatomen substituierter, funktioneller, organischer, gesättigter oder ungesättigter Rest, 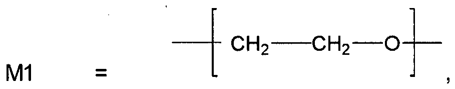 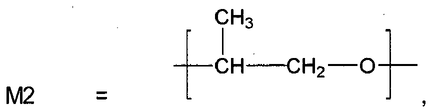 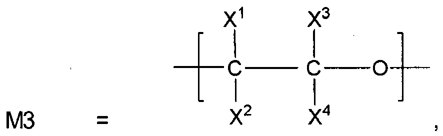 wobei X¹ bis X⁴ unabhängig voneinander Wasserstoff oder lineare, cyclische oder verzweigte, aliphatische oder aromatische, gesättigte oder ungesättigte Kohlenwasserstoffreste mit 1 bis zu 50 C-Atomen, vorzugsweise 2 bis 50 C-Atomen, sind, die gegebenenfalls Halogenatome enthalten können, mit der Maßgabe, dass X¹ bis X⁴ nicht so gewählt sind, dass M3 gleich M1 oder M2 ist, 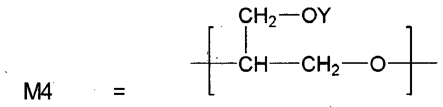 wobei Y unabhängig voneinander ein linearer, cyclischer oder verzweigter, aliphatischer oder aromatischer, gesättigter oder ungesättigter Kohlenwasserstoffrest mit 2 bis zu 30 C-Atomen ist, der auch Heteroatome enthalten kann, 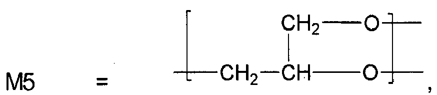 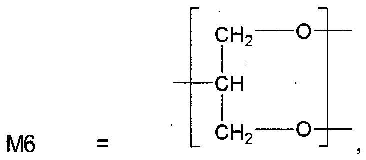 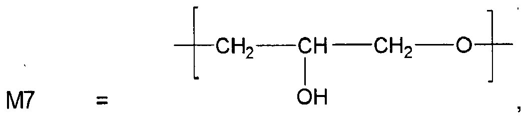 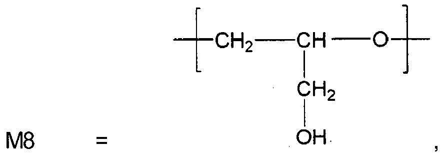 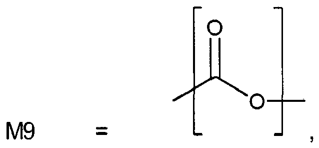 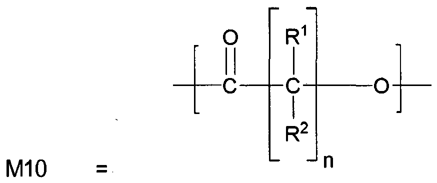 wobei R¹ und R² unabhängig voneinander entweder Wasserstoff, Alkyl-, Alkoxy-, Aryl- oder Aralkylgruppe, vorzugsweise mit 1 bis 15 Kohlenstoffatomen, sind, sowie n unabhängig von einander 3 bis 8, wobei n, R¹ und R² in jeder Einheit M10 gleich oder unterschiedlich sein können, 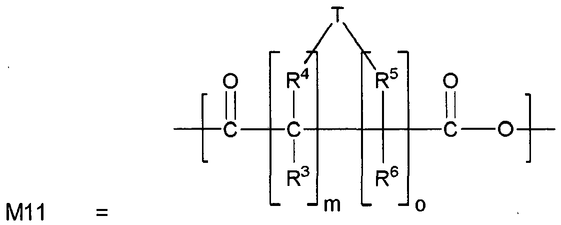 wobei R³, R⁴, R⁵ und R⁶ unabhängig voneinander entweder Wasserstoff, Alkyl-, Alkenyl-, Alkyliden-, Alkoxy-, Aryl- oder Aralkylgruppen sind, und die Reste R⁴ und R⁵ cycloaliphatisch oder aromatisch über das Fragment T verbrückt sein können, gegebenenfalls können die Reste R³
und R⁶ auch eine Bindung bilden, m und o können unabhängig voneinander 1 bis 8 sein, wobei die Einheiten mit den Indizes m und o beliebig angeordnet sein können, T einen divalenten Alkylen- oder Alkenylenrest darstellt und die Indizes m und o wie auch die Reste T, R³, R⁴, R⁵ und R⁶ in jeder Einheit M11 gleich oder unterschiedlich sein können, 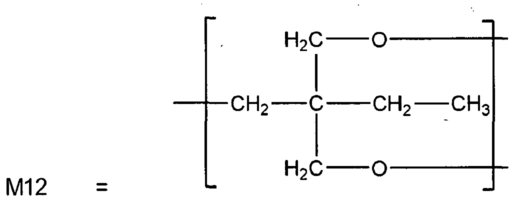 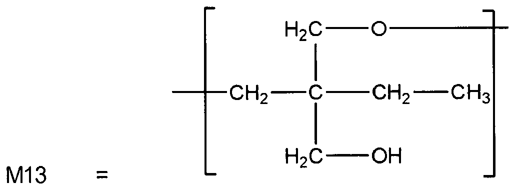 wobei die Monomere M1 bis M13 in beliebigen Verhältnissen, sowohl blockweise, alternierend oder statistisch angeordnet sein können, als auch einen Verteilungsgradienten aufweisen können und wobei insbesondere die Monomere M1 bis M4 frei permutierbar sind, mit den Maßgaben, dass i9 > 0 ist, dass mindestens eine Einheit M12, M5 oder M6 enthalten ist, bei der sich an keinem Ende direkt ein Rest J und an jedem Ende mindestens eine Einheit ausgewählt aus M1, M2 und M3 anschließt, und dass zwei Monomereinheiten des Typs M9 nicht aufeinander folgen,
wobei im Mittel mindestens ein Rest Rᵥ pro Molekül der Formel (IV) vorhanden ist,
mit der Maßgabe, dass die Summe aus b1 und b2 = b ist, dass pro Molekül der Formel (IV) die mittlere Anzahl Σa der D-Einheiten pro Molekül nicht größer als 2000, und die mittlere Anzahl Σb der R_{P} und R_{V} tragenden Einheiten pro Molekül nicht größer als 100 ist, die mittlere Anzahl Σc+d pro Molekül nicht größer als 20 ist, und
gemittelt über alle erhaltenen Verbindungen der Formel (IV) höchstens 20 mol%, der Reste R_{P}, R¹, R^{1a} oder R^{1b}, vom Typ -OR⁴ sind,
als Schaumstabilisatoren verwendet wird.

2. Verfahren gemäß Anspruch 1, **dadurch gekennzeichnet, dass** Σ i5 + i6 ≥ i + 1 ist.

3. Verfahren gemäß Anspruch 1 oder 2, **dadurch gekennzeichnet, dass** der Rest Rᵥ mindestens eine Struktureinheit aufweist, die dadurch entsteht, dass die Monomereinheit M9 direkt mit einer Einheit ausgewählt aus M5, M6, M7 oder M8 verknüpft ist.

4. Zusammensetzung, geeignet zur Herstellung von Polyurethanschäumen, die zumindest eine Polyolkomponente, einen Katalysator, der die Ausbildung einer Urethan- oder Isocyanurat-Bindung katalysiert und optional ein Treibmittel aufweist, **dadurch gekennzeichnet, dass** sie außerdem eine Polysiloxanverbindung der Formel (IV), wie in zumindest einem der Ansprüche 1 bis 3 definiert, enthält und gegebenenfalls weitere Additive und gegebenenfalls eine Isocyanat-Komponente aufweist.

5. Polyurethanschaum, hergestellt durch ein Verfahren gemäß zumindest einem der Ansprüche 1 bis 3.

6. Polyurethanschaum gemäß Anspruch 5, **dadurch gekennzeichnet, dass** es ein Polyurethanweichschaum ist.

7. Verwendung der Polyurethanschäume gemäß einem der Ansprüche 5 oder 6 als oder zur Herstellung von Möbeln, Isolationsmitteln, Verpackungsmaterialien, Kühlschrankisolierungen, Dämmplatten, Sandwichelementen, Rohrisolationen, Sprühschäumen, 1- & 1,5-Komponenten-Dosenschäumen, Holzimitaten, Modellschäumen, Verpackungsschäumen, Matratzen, Möbelpolster, Automobil-Sitzpolster, Kopfstützen, Instrumententafeln, Automobil-Innenverkleidungen, Automobil-Dachhimmel, Schallabsorptionsmaterialien, Lenkräder, Schuhsolen, Teppichrückseitenschäumen, Filterschäumen, Dichtschäumen, Dichtmitteln oder Klebern.

## Claims

1. Process for producing polyurethane foams, **characterized in that** a polysiloxane compound of the formula (IV) 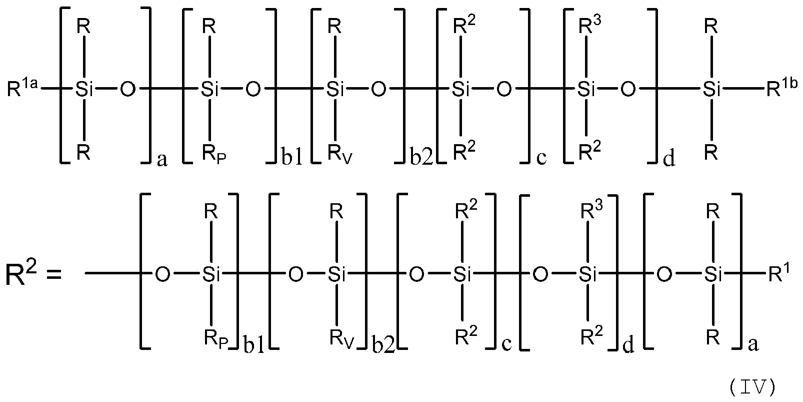 in which
a is mutually independently from 0 to 2000,
b1 is mutually independently from 0 to 60,
b2 is mutually independently from 0 to 60,
c is mutually independently from 0 to 10,
d is mutually independently from 0 to 10,
Ris at least one moiety from the group of linear, cyclic or branched, saturated or unsaturated hydrocarbon moieties having from 1 to 20 carbon atoms or is an aromatic hydrocarbon moiety having from 6 to 20 carbon atoms,
R¹ is mutually independently R or -OR⁴,
R^{1a} is mutually independently R, R_{V}, R_{P} or -OR⁴,
R^{1b} is mutually independently R, R_{V}, R_{P} or -OR⁴,
R³ is mutually independently R or a saturated or unsaturated, organic moiety optionally substituted with heteroatoms and preferably selected from the group of the alkyl, aryl, chloroalkyl, chloroaryl, fluoroalkyl, cyanoalkyl, acryloxyaryl, acryloxyalkyl, methacryloxyalkyl, methacryloxypropyl or vinyl moieties,
R⁴ is mutually independently an alkyl moiety having from 1 to 10 carbon atoms, preferably methyl, ethyl or isopropyl moiety,
R_{P} is mutually independently -OR⁴ or hydrogen or is unbranched polyether moieties bonded by way of Si-C bonds and made of alkylene oxide units having from 1-30 carbon atoms, of arylene oxide units and/or of glycidyl ether units with weight-average molar mass from 200 to 30 000 g/mol, and/or an aliphatic and/or cycloaliphatic and/or aromatic polyester or polyetherester moiety with weight-average molar mass from 200 to 30 000 g/mol bonded by way of Si-C bonds,
R_{V} is a moiety of the formula (Ia) linked by way of an Si-C bond
-Z'(-Q-M1ᵢ₁-M2ᵢ₂-M3ᵢ₃-M4ᵢ₄-M5ᵢ₅-M6ᵢ₆-M7ᵢ₇-M8ᵢ₈-M9ᵢ₉-M10ᵢ₁₀- M11ᵢ₁₁-M12ᵢ₁₂-M13ᵢ₁₃-Jᵢ₁₄)ᵢ(X-J)ₖ (Ia)
where
i = from 1 to 10, preferably from 1 to 5, preferably from 2 to 3
k = from 0 to 9, preferably from 0 to 5, preferably from 1 to 3
i + k = from 1 to 10, preferably from 1 to 5, particularly preferably from 2 to 3
i1 to i14 = respectively mutually independently from 0 to 500, preferably from 0.1 to 100 and with particular preference form 1 to 30
Q= being identical or different, O, NH, N-alkyl, N-aryl or S,
Z' = any desired organic moiety, where each Q is bonded to a carbon atom of the organic moiety,
J is mutually independently hydrogen, a linear, cyclic or branched, aliphatic or aromatic, saturated or unsaturated hydrocarbon moiety having from 1 to 30 carbon atoms, a carboxylic acid moiety having from 1 to 30 carbon atoms or a functional, saturated or unsaturated organic moiety substituted with heteroatoms, 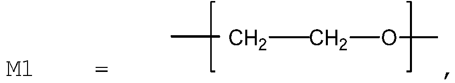 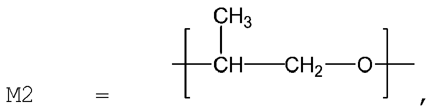 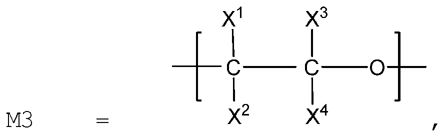 where X¹ to X⁴ are mutually independently hydrogen or linear, cyclic or branched, aliphatic or aromatic, saturated or unsaturated hydrocarbon moieties having from 1 to 50 carbon atoms, preferably from 2 to 50 carbon atoms, and can optionally comprise halogen atoms, with the proviso that the selection of X¹ to X⁴ is not such that M3 is identical with M1 or M2, 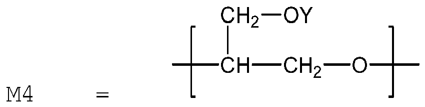 where Y is mutually independently a linear, cyclic or branched, aliphatic or aromatic, saturated or unsaturated hydrocarbon moiety having from 2 to 30 carbon atoms and can also comprise heteroatoms, 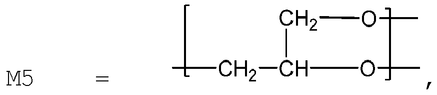 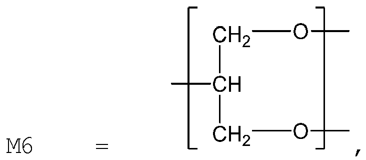 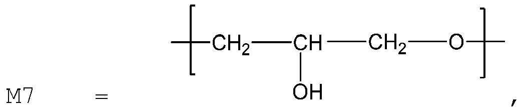 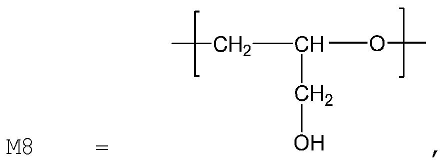 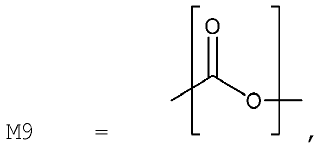 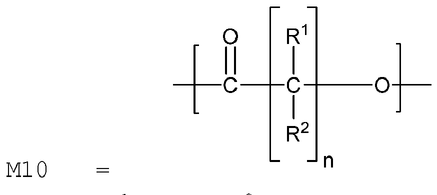 where R¹ and R² are mutually independently either hydrogen, alkyl group, alkoxy group, aryl group or aralkyl group, preferably having from 1 to 15 carbon atoms, and n are mutually independently from 3 to 8, where n, R¹ and R² in each M10 unit can be identical or different, 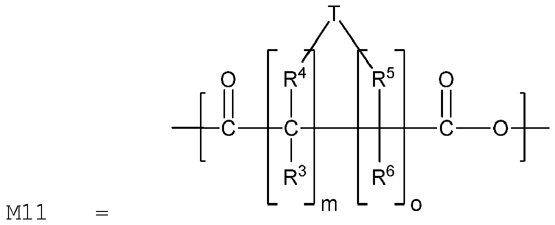 where R³, R⁴, R⁵ and R⁶ are mutually independently either hydrogen, alkyl groups, alkenyl groups, alkylidene groups, alkoxy groups, aryl groups or aralkyl groups and the moieties R⁴ and R⁵ can have cycloaliphatic or aromatic bridging by way of the fragment T, optionally the moieties R³ and R⁶ can also form a bond, m and o can be mutually independently from 1 to 8, where the units with the indices m and o can be arranged randomly, T is a divalent alkylene or alkenylene moiety and the indices m and o and the moieties T, R³, R⁴, R⁵ and R⁶ in each unit M11 can be identical or different, 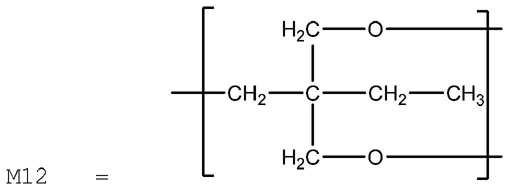 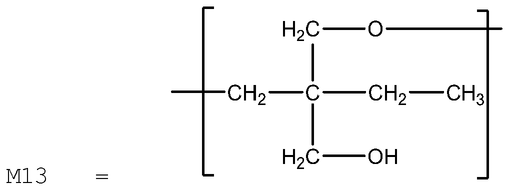 where the monomers M1 to M13 can have been arranged in any desired ratios, either blockwise, in alternation, or randomly, or else can exhibit a distribution gradient, and where in particular the monomers M1 to M4 are freely permutable, with the provisos that i9 > 0, that at least one unit M12, M5 or M6 is present for which there is no moiety J directly adjoining at any end and there is at least one unit selected from M1, M2 and M3 adjoining at each end, and that two monomer units of the type M9 do not occur in succession,
where on average at least one moiety R_{V} is present per molecule of formula (IV),
with the proviso that the sum of b1 and b2 = b, that the average number Σa of the D units per molecule of the formula (IV) is not greater than 2000, and the average number Σb of the R_{P}- and R_{V}-bearing units per molecule is not greater than 100, and the average number Σc+d per molecule is not greater than 20, and averaged over all of the compounds obtained of the formula (IV), at most 20 mol% of the moieties R_{P}, R¹, R^{1a} or R^{1b} are of the type -OR⁴,
is used as foam stabilizer.

2. Process according to Claim 1, **characterized in that** Σ i5 + 16 ≥ i + 1.

3. Process according to Claim 1 or 2, **characterized in that** the moiety R_{V} comprises at least one structural unit which arises through binding of the monomer unit M9 directly to a unit selected from M5, M6, M7 or M8.

4. Composition suitable for producing polyurethane foams which comprises at least one polyol component and one catalyst catalyzing formation of a urethane bond or isocyanurate bond, and which optionally comprises a blowing agent, **characterized in that** it moreover comprises a polysiloxane compound of the formula (IV) as defined in at least one of Claims 1 to 3 and optionally comprises further additives and optionally comprises an isocyanate component.

5. Polyurethane foam produced by a process according to at least one of Claims 1 to 3.

6. Polyurethane foam according to Claim 5, **characterized in that** it is a flexible polyurethane foam.

7. Use of the polyurethane foams according to Claim 5 or 6 as or for the production of furniture, refrigerator-insulation materials, other means of insulation or insulation sheets, packaging materials, sandwich elements, spray foams, single- & 1.5-component canister foams, wood-imitation products, modelling foams, packaging foams, mattresses, furniture cushioning, automobile-seat cushioning, headrests, instrument panels, automobile-interior cladding products, automobile roof lining, sound-deadening materials, steering wheels, shoe soles, carpet-backing foams, filter foams, sealant foams, sealants or adhesives.

## Revendications

1. Procédé pour la préparation de mousses de polyuréthane, **caractérisé en ce qu'**on utilise un composé polysiloxane de formule (IV) 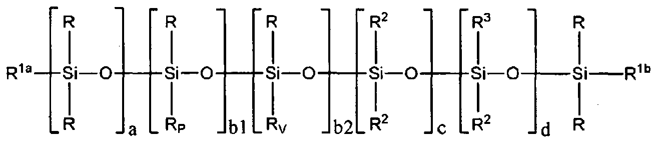 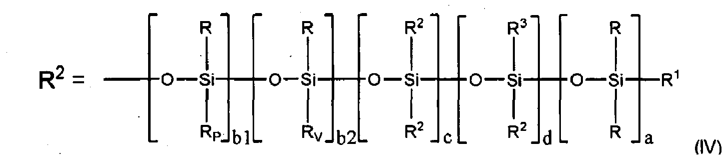 dans laquelle
a vaut, indépendamment l'un de l'autre, 0 à 2000,
b1 vaut, indépendamment l'un de l'autre, 0 à 60,
b2 vaut, indépendamment l'un de l'autre, 0 à 60,
c vaut, indépendamment l'un de l'autre, 0 à 10,
d vaut, indépendamment l'un de l'autre, 0 à 10,
R représente au moins un radical du groupe des radicaux hydrocarbonés linéaires, cycliques ou ramifiés, saturés ou insaturés, comprenant 1 jusqu'à 20 atomes de carbone ou des radicaux hydrocarbonés aromatiques comprenant 6 jusqu'à 20 atomes de carbone,
R¹ représente, indépendamment l'un de l'autre, R ou -OR⁴,
R^{1a} représente, indépendamment l'un de l'autre, R, R_{V}, R_{P} ou -OR⁴,
R^{1b} représente, indépendamment l'un de l'autre, R, R_{V}, R_{P} ou -OR⁴,
R³ représentent, indépendamment les uns des autres, R ou un radical organique le cas échéant substitué par des hétéroatomes, saturé ou insaturé, de préférence choisi dans le groupe formé par les radicaux alkyle, aryle, chloroalkyle, chloroaryle, fluoroalkyle, cyanoalkyle, acryloxyaryle, acryloxyalkyle, méthacryloxyalkyle, méthacryloxypropyle ou vinyle,
R⁴ représente, indépendamment l'un de l'autre, un radical alkyle comprenant 1 à 10 atomes de carbone, de préférence un radical méthyle, éthyle ou isopropyle,
R_{P} représente, indépendamment l'un de l'autre, -OR⁴, hydrogène ou des radicaux polyéther non ramifiés, liés via des liaisons Si-C, d'unités d'oxyde d'alkylène comprenant 1-30 atomes de carbone, d'unités d'oxyde d'arylène et/ou d'unités de glycidyléther présentant un poids moléculaire pondéral moyen entre 200 et 30 000 g/mole et/ou des radicaux polyester ou polyétherester liés via des liaisons Si-C, aliphatiques et/ou cycloaliphatiques et/ou aromatiques présentant un poids moléculaire pondéral moyen entre 200 et 30 000 g/mole,
R_{V} représente un radical lié via une liaison Si-C de formule (Ia)
-Z'(-Q-M1ᵢ₁-M2ᵢ₂-M3ᵢ₃-M4ᵢ₄-M5ᵢ₅-M6ᵢ₆-M7ᵢ₇-M8ᵢ₈-M9ᵢ₉-M10ᵢ₁₀- M11ᵢ₁₁-M12ᵢ₁₂-M13ᵢ₁₃-Jᵢ₁₄)ᵢ(X-J)ₖ (Ia)
où
i = 1 à 10, de préférence 1 à 5, préférablement 2 à 3
k = 0 à 9, de préférence 0 à 5, préférablement 1 à 3
i + k = 1 à 10, de préférence 1 à 5, de manière particulièrement préférée 2 à 3
i1 à i14 = à chaque fois, indépendamment les uns des autres, 0 à 500, de préférence 0,1 à 100, en particulier de préférence 1 à 30,
Q = en étant identique ou différent, O, NH, N-alkyle, N-aryle ou S,
Z' = un radical organique quelconque, chaque Q étant lié à un atome de carbone du radical organique,
J représentent, indépendamment les uns des autres, hydrogène, un radical hydrocarboné linéaire, cyclique ou ramifié, aliphatique ou aromatique, saturé ou insaturé comprenant 1 jusqu'à 30 atomes de carbone, un radical acide carboxylique comprenant 1 à 30 atomes de carbone ou un radical substitué par des hétéroatomes, fonctionnel, organique, saturé ou insaturé, 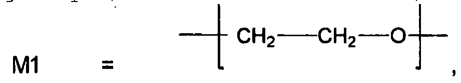 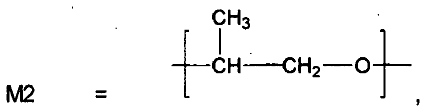 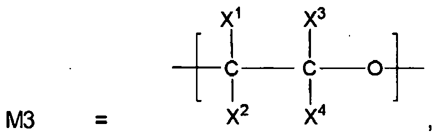
X¹ à X⁴ représentant, indépendamment les uns des autres, hydrogène ou des radicaux hydrocarbonés linéaires, cycliques ou ramifiés, aliphatiques ou aromatiques, saturés ou insaturés comprenant 1 jusqu'à 50 atomes de carbone, de préférence 2 à 50 atomes de carbone, qui peuvent le cas échéant contenir des atomes d'halogène, à condition que X¹ à X⁴ ne soient pas choisis de manière telle que M3 soit égal à M1 ou M2, 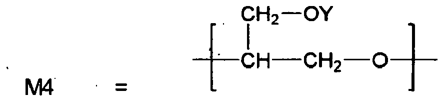
Y représentant, indépendamment les uns des autres, un radical hydrocarboné linéaire, cyclique ou ramifié, aliphatique ou aromatique, saturé ou insaturé comprenant 2 jusqu'à 30 atomes de carbone, qui peut également contenir des hétéroatomes, 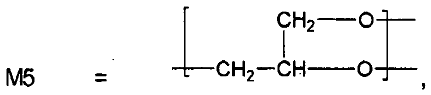 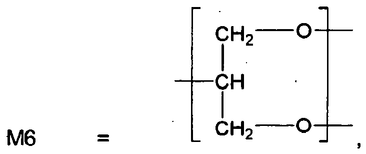 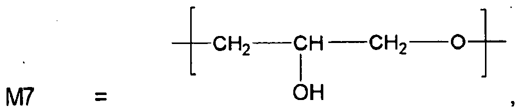 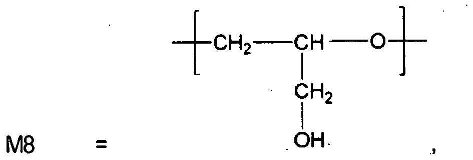 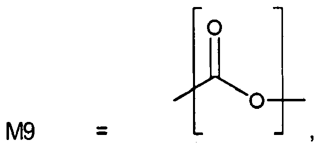 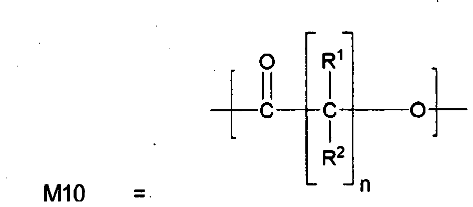
R¹ et R² représentant, indépendamment l'un de l'autre, hydrogène, un groupe alkyle, alcoxy, aryle ou aralkyle, comprenant de préférence 1 à 15 atomes de carbone, n valant, indépendamment l'un de l'autre, 3 à 8, n, R¹ et R² dans chaque unité M10 pouvant être identiques ou différents, 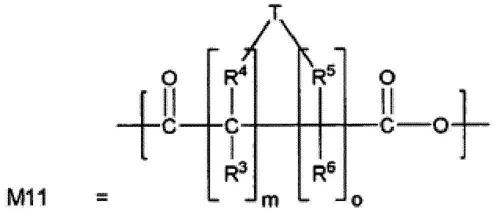
R³, R⁴, R⁵ et R⁶ représentant, indépendamment les uns des autres, hydrogène, des groupes alkyle, alcényle, alcoxy, aryle ou aralkyle, et les radicaux R⁴ et R⁵ pouvant être pontés de manière cycloaliphatique ou aromatique via le fragment T, le cas échéant les radicaux R³ et R⁶ peuvent également former une liaison, m et o pouvant valoir, indépendamment l'un de l'autre, 1 à 8, les unités présentant les indices m et o pouvant être disposées de manière quelconque, T représentant un radical alkylène ou alcénylène divalent et les indices m et o ainsi que les radicaux T, R³, R⁴, R⁵ et R⁶ pouvant être identiques ou différents dans chaque unité M11, 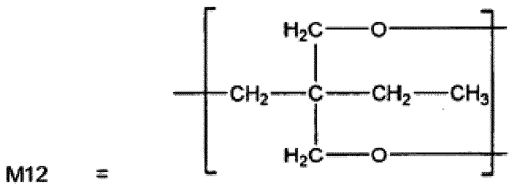 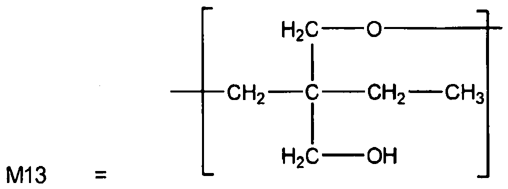
les monomères M1 à M13 pouvant être disposés dans des rapports quelconques, tant par blocs, de manière alternée ou statistique qu'en présentant un gradient de répartition et en particulier les monomères M1 à M4 pouvant être librement permutables, aux conditions que i9 > 0, qu'au moins une unité M12, M5 ou M6 soit contenue dans laquelle aucune extrémité n'est suivie directement d'un radical J et chaque extrémité est suivie d'au moins une unité choisie parmi M1, M2 et M3 et deux unités monomères du type M9 n'étant pas consécutives,
en moyenne au moins un radical R_{V} étant présent par molécule de formule (IV), à la condition que la somme de b1 et de b2 = b, que par molécule de formule (IV), le nombre moyen Σa des unités D par molécule ne soit pas supérieur à 2000, et le nombre moyen Σb des unités portant R_{P} et R_{V} par molécule ne soit pas supérieur à 100, le nombre moyen Σc + d par molécule ne soit pas supérieur à 20, et en moyenne sur tous les composés obtenus de formule (IV) au plus 20% en mole des radicaux R_{P}, R¹, R^{1a} ou R^{1b} soient du type -OR⁴, comme stabilisants de mousse.

2. Procédé selon la revendication 1, **caractérisé en ce que** Σi5 + i6 ≥ i + 1.

3. Procédé selon la revendication 1 ou 2, **caractérisé en ce que** le radical Rᵥ présente au moins une unité de structure qui est formée par le fait que l'unité monomère M9 est liée directement à une unité choisie parmi M5, M6, M7 ou M8.

4. Composition, appropriée pour la préparation de mousses de polyuréthane, qui présente au moins un composant polyol, un catalyseur qui catalyse la formation d'une liaison uréthane ou isocyanurate et éventuellement un agent gonflant, **caractérisé en ce qu'**elle contient en outre un composé polysiloxane de formule (IV), comme défini dans au moins l'une quelconque des revendications 1 à 3, et présente le cas échéant d'autres additifs et le cas échéant un composant isocyanate.

5. Mousse de polyuréthane, préparée par un procédé selon au moins l'une quelconque des revendications 1 à 3.

6. Mousse de polyuréthane selon la revendication 5, **caractérisée en ce qu'**il s'agit d'une mousse souple de polyuréthane.

7. Utilisation des mousses de polyuréthane selon l'une quelconque des revendications 5 ou 6, comme ou pour la fabrication de meubles, de moyens d'isolation, de matériaux d'emballage, d'isolations de réfrigérateur, de plaques d'isolation, d'éléments sandwich, d'isolations de tuyaux, de mousses pulvérisées, de mousses en boîte à 1 & 1,5 composant, de produits d'imitation du bois, de mousses de modélisation, de mousses d'emballage, de matelas, de rembourrages de meubles, de rembourrages de siège de voiture, d'appuis-tête, de tableaux de bord, de revêtements internes de voitures, de ciels de toit de voiture, de matériaux d'absorption du bruit, de volants, de semelles de chaussures, de mousses de face arrière de tapis, de mousses de filtre, de mousses d'étanchéité, de moyens d'étanchéité ou de colles.
